# EUROPÄISCHE PATENTSCHRIFT

(11) **EP 3 663 471 B1**
(45) Veröffentlichungstag und Bekanntmachung des Hinweises auf die Patenterteilung: **17.01.2024**
(21) Anmeldenummer: 19214062.2
(22) Anmeldetag: 06.12.2019
(51) Int. Cl.: E03C 1/02, F16L 11/15, F16L 25/00, F16L 47/02, F16L 47/04, B29C 65/00

(54) **VERFAHREN ZUR HERSTELLUNG EINES SCHLAUCHS UND SCHLAUCH**
METHOD FOR PRODUCING A HOSE AND HOSE
PROCÉDÉ DE FABRICATION D'UN TUYAU ET TUYAU

(30) Priorität: 07.12.2018 DE 102018009532; 18.12.2018 DE 102018132712; 18.12.2018 DE 202018107249 U; 21.12.2018 DE 202018107369 U; 27.05.2019 DE 102019003667; 27.05.2019 DE 202019002277 U
(43) Veröffentlichungstag der Anmeldung: 10.06.2020
(73) Patentinhaber: UNIWELL Rohrsysteme GmbH & Co. KG, 96106 Ebern (DE)
(72) Erfinder: Friedemann, Robert, 96188 Stettfeld (DE)
(74) Vertreter: Weyers, Christopher

(56) Entgegenhaltungen:
- EP-A1- 1 006 304
- EP-A1- 2 333 167
- EP-A2- 1 640 141
- DE-A1- 4 307 704
- DE-A1-102010 030 718

## Beschreibung

Die vorliegende Erfindung betrifft ein Verfahren zur Herstellung eines Schlauchs zur Wasserleitung, einen Schlauch zur Wasserleitung und eine Verwendung eines Schlauchs in einem wasserführenden System zur Wasserleitung.

Die vorliegende Erfindung betrifft einen Schlauch ausgebildet zur Wasserleitung, insbesondere zur Trinkwasserleitung in einem trinkwasserführenden System, und ausgebildet zum Anschließen wenigstens einer Sanitärarmatur, insbesondere ausgewählt aus der Gruppe der Waschtisch- und/oder Dusch- und/oder der Küchenarmaturen, weiter insbesondere der Spültischarmaturen, und/oder der (Hand-) Brausen, wie Duschbrausen und/oder Küchenbrausen, und/oder ausgebildet zum Anschlie-βen einer Geschirrspül- und/oder Waschmaschine und/oder einer Wasserversorgungsleitung, insbesondere eines Eckventils, mit einem vorzugsweise gewellten Schlauchabschnitt aus Kunststoff. Des Weiteren betrifft die vorliegende Erfindung ein Verfahren zur Herstellung eines Schlauchs der vorgenannten Art und die Verwendung eines solchen Schlauchs in einem trinkwasserführenden System.

Ein Schlauch der eingangs genannten Art zum Einsatz im Sanitärbereich ist beispielsweise aus der EP 2 159 465 B1 bekannt. Der in dem vorgenannten Dokument beschriebene Schlauch weist einen Innenschlauch aus Kunststoff als wasserführendes fluiddichtes Medium und eine Ummantelung aus einem Geflecht zur Umsetzung einer druckstabilen Ausbildung auf. Darüber hinaus ist an einem Schlauchende ein separates Anschlussstück vorgesehen, das zur Verbindung mit einem komplementär ausgebildeten Anschlussstück der Sanitärarmatur ausgebildet ist. Zur kraftschlüssigen Verbindung des Wasserschlauches mit dem Anschlussstück wird das entsprechende Schlauchende auf das Anschlussstück aufgepresst, wozu eine Presshülse verwendet wird. Die Presshülse wird dabei von außen auf die Ummantelung bzw. den Schlauchabschnitt aufgepresst.

Nachteilig an dem aus der EP 2 159 465 B1 bekannten Druckschlauch ist, dass der Innenschlauch in Folge des Pressvorgangs einer erheblichen radial nach innen gerichteten Druckkraft ausgesetzt ist, so dass der Innenschlauch im Verbindungsbereich mit dem Anschlussstück irreversibel zusammengedrückt wird, einhergehend mit einer Querschnittsverengung im Bereich des Anschlussstücks. Infolgedessen findet eine Beschleunigung des Wasserstroms bzw. eine Reduzierung des Wasserdrucks im Bereich des Anschlussstücks statt, so dass eine Wasserentnahme bei einem verringerten Wasserdruck möglich ist. Darüber hinaus ist die vorgenannte Querschnittsverengung im Bereich des Anschlussstücks bzw. des Schlauchendes mit einer Reduzierung der maximalen Durchflussmenge des Wasserschlauches verbunden.

Was das Material des Anschlussstücks anbelangt, so wird im Stand der Technik üblicherweise auf Metalllegierungen zurückgegriffen. In diesem Zusammenhang wird auf die DE 196 54 435 A1 verwiesen, aus der ein Wasserschlauch mit einem aus Messing hergestellten Anschlussstück bekannt ist. Nachteilig an dieser Materialwahl sind die vergleichsweise hohen Rohstoffkosten, die sich negativ auf den Produktpreis und somit auf die Akzeptanz am Absatzmarkt auswirken. Zu berücksichtigen ist auch, dass die Materialkosten metallischer Legierungen zum Teil erheblichen Schwankungen unterliegen. Diese Preisinstabilität metallischer Werkstoffe kann sich negativ auf die Produktionskosten und letztlich den Produktpreis am Absatzmarkt auswirken.

Zusätzlich zu den vorgenannten wirtschaftlichen Nachteilen ist aus fertigungstechnischer Sicht zu beachten, dass Anschlussstücke aus metallischen Legierungen einer aufwändigen materialabtragenden Bearbeitung bedürfen. Zu berücksichtigen ist dabei, dass Sanitärarmaturen oftmals herstellerspezifische Anschlussstücke mit unterschiedlichen Anschlussgeometrien aufweisen. Entsprechend müssen auch die Anschlussstücke individuell an die herstellerspezifisch vorgegebenen komplementären Anschlussgeometrien angepasst werden, was zeit- und kostenintensiv ist. Darüber hinaus muss die Presshülse eine dauerhaft hohe Kraft auf den Wasserschlauch übertragen, um eine wasserdichte Verbindung zwischen dem Wasserschlauch und dem metallischen Anschlussstück zu gewährleisten.

Die EP 1 006 304 A1 betrifft eine Anordnung von flexiblen Anschlusselementen aus Kunststoff für den Sanitärbereich und ein Verfahren zur Herstellung solcher Elemente. Die Anordnung umfasst einen flexiblen Schlauch und ein Paar von Anschlussstücken, die an den Enden des Schlauchs befestigt sind, wobei der Schlauch und die Anschlussstücke aus einem thermoplastischen Material hergestellt sind. In einem ersten Herstellungsverfahren werden freie Anschlussstücke auf den Schlauch gesetzt und anschließend die Schlauchenden so verformt, dass sich ringförmige Vorsprünge zum Halten der Anschlussstücke bilden. In einem alternativen Herstellungsverfahren wird an mindestens einem Ende des Schlauchs ein Anschlussstück wärmeverschweißt. Das andere Schlauchende kann nach dem ersten Herstellungsverfahren gebildet werden

Die DE 10 2010 030 718 A1 betrifft eine Rohrverbindung und ein Verfahren zum Herstellen einer solchen Rohrverbindung zum Anschluss an einen Motor, insbesondere sogenannter Blowby-Rohre zur Rückführung von heißen Motorgasen. Die Rohrverbindung weist ein Wellrohr und wenigstens ein Anschlussstück auf, die im Zuge eines Rotationsschweißverfahrens stoffschlüssig miteinander verbunden sind. Das Wellrohr kann extrudiert sein, wobei beim Extrudieren des Wellrohrs an dem jeweils mit dem Anschlussstück zu verbindenden Endteil ein glatter Endbereich mit glatter Außen- und Innenwandung ausgebildet sein kann.

Die DE 43 07 704 A1 offenbart ein Verfahren zum Verschweißen von Wellrohr-Rohrstücken zu einem Rohr, das insbesondere als Schutzrohr für Nachrichtenkabel oder Lichtwellenleiter eingesetzt werden soll. Zum Verbinden sind Schweiß-Muffen vorgesehen, die ringförmige Ausnehmungen aufweisen, in die die Enden der Rohrstücke geschoben und anschließend mit der Muffe verschweißt werden, insbesondere über eine in der Muffe angeordnete Widerstandsheizung.

Die EP 1 640 141 A2 betrifft eine Vorrichtung, Anordnung und ein Verfahren zum Verbinden von Leitungen in einem Kraftfahrzeug, insbesondere von Kraftstoffleitungen. Ein Quick-Konnektor wird auf einer Anschlussseite mit einem Leitungsende durch Reibschweißen fest verbunden und auf der anderen Anschlussseite mit einem weiteren Leitungsende, beispielsweise mittels eines Clips, fixiert.

Die EP 2 333 167 A1 betrifft einen Schlauch mit einem Anschlussstück, wobei das Anschlussstück durch Verschweißen, insbesondere Rotationsreibschweißen mit dem Schlauchende verbunden ist. Der Schlauch ist dazu ausgebildet, Wasser von einem Wasserhahn einer Wasserversorgung zu einer Waschmaschine oder einem Geschirrspüler zu leiten.

Vor diesem Hintergrund liegt der vorliegenden Erfindung die Aufgabe zugrunde, einen flexiblen Schlauch sowie ein Verfahren zur Herstellung eines Schlauchs ausgebildet zur Wasserleitung, insbesondere Trinkwasserleitung in einem trinkwasserführenden System, und die Verwendung eines solchen Schlauchs zur Trinkwasserleitung zur Verfügung zu stellen, wobei der Schlauch ein gegenüber dem Stand der Technik verbessertes Strömungsverhalten am Zu- und Auslauf aufweist und sich in einfacher Weise und kostengünstig für unterschiedliche Anwendungen fertigen lässt.

Die vorgenannte Aufgabe wird durch ein Verfahren zur Herstellung eines Schlauchs gemäß Patentanspruch 1, durch einen Schlauch mit den Merkmalen von Patentanspruch 8 oder durch die Verwendung eines Schlauchs gemäß Patentanspruch 15 gelöst. Vorteilhafte Weiterbildungen sind Gegenstand der Unteransprüche.

Ein Grundgedanke der Erfindung betrifft einen Schlauch mit einem Schlauchabschnitt mit wenigstens einem abweichend zum Schlauchabschnitt ausgebildeten Anschlussstück aus Kunststoff zur Verbindung des Schlauchs mit einem komplementär ausgebildeten Anschlussstück einer Sanitärarmatur oder einer Geschirrspül- und/oder Waschmaschine. Der Schlauchabschnitt und das Anschlussstück sind erfindungsgemäß durch fertigungstechnisches Fügen dauerhaft miteinander verbunden. Bei dem Schlauchabschnitt und dem Anschlussstück handelt es sich somit insbesondere um zwei separate Komponenten, die fertigungstechnisch verbunden werden. Beim Fügen werden insbesondere zwei oder mehr feste Körper mit geometrisch bestimmter Gestalt dauerhaft verbunden (gefügt). Dabei kann zusätzlich noch ein sogenannter "formloser Stoff" zum Einsatz kommen, dessen Form nicht definiert ist. Dazu zählt beispielsweise Klebstoff. Die einzelnen Verfahrensgruppen werden in der DIN 8593 näher bestimmt. Erfindungsgemäß wird vorzugsweise vorgesehen, dass der Schlauchabschnitt und das Anschlussstück miteinander verschweißt werden. Aber auch ein Verkleben des Anschlussstücks mit dem Schlauchabschnitt ist grundsätzlich möglich.

Der Begriff "Fügen" im Sinne der Erfindung ist vorzugsweise breit zu verstehen und kann neben dem Verschweißen und dem Verkleben von Schlauchabschnitt und Anschlussstück weitere Verbindungstechniken umfassen. Insbesondere kann der Begriff "Fügen" wenigstens alle verbindenden Verfahren umfassen, die in der DIN-Norm 8593 dargelegt sind. Hierzu zählen: Zusammensetzen; Füllen; Anpressen; Einpressen; Fügen durch Urformen; Fügen durch Umformen; Fügen durch Schwei-βen; Fügen durch Löten; und/oder Fügen durch Kleben. "Fügen" kann insbesondere Einbetten sein, weiter insbesondere Umspritzen, Eingießen, Umgießen und/oder Einvulkanisieren.

So ist es beispielsweise möglich, dass das Anschlussstück auf den Schlauchabschnitt ausgespritzt bzw. an den Schlauchabschnitt angespritzt ist und dadurch dauerhaft mit dem Schlauchabschnitt verbunden ist. Zu dem Schlauchabschnitt wird das Anschlussstück also als Ergänzungsstück aus formlosem Stoff in einem Spritzgießprozess gebildet. Bei dem Anschlussstück handelt es sich dann um ein Funktionselement, das auf den Schlauchabschnitt auf- bzw. angespritzt ist.

Für das Anspritzen eines Anschlussstückes kann ein Schlauchabschnitt in die Kavität eines Spritzgießwerkzeuges eingelegt werden. Der Schlauchabschnitt kann dabei vor dem Einlegen in das Werkzeug und/oder im Werkzeug aufgeheizt werden, um die Anbindung der Kunststoffschmelze an den Schlauchabschnitt zu verbessern. Nach dem Schließen des Werkzeuges kann die Injektion der Kunststoffschmelze gestartet werden. Plastifizierter Kunststoff kann unter hohem Druck in das Werkzeug geleitet werden und das Anschlussstück in dem Formnest ausbilden. Nach dem Erstarren der Kunststoffschmelze kann der Schlauch, bestehend aus dem Schlauchabschnitt mit wenigstens einem abweichend zum Schlauchabschnitt ausgebildeten Anschlussstück, aus dem Werkzeug entnommen werden.

Das Anschlussstück und der Schlauchabschnitt bestehen jeweils aus einem Kunststoffmaterial. Vorzugsweise liegt die Festigkeit der Fügeverbindung im Bereich der Materialfestigkeit des verwendeten Kunststoffmaterials. Der Schlauchabschnitt und das Anschlussstück können in separaten Prozessen hergestellt sein. Auch kann das Anschlussstück mit einem anderen Verfahren als der Schlauchabschnitt hergestellt sein. Bei der Herstellung des erfindungsgemäßen Anschlussstücks aus Kunststoff lässt sich ein Herstellungsverfahren wählen, bei dem keine nachgeordnete formgebende bzw. materialabtragende Bearbeitung des Anschlussstücks notwendig ist, so dass der erfindungsgemäße Schlauch in wenigen Arbeitsschritten und damit kostengünstig herstellbar ist.

Aufgrund der Verschweißung des Schlauchabschnitts mit dem abweichend zum Schlauchabschnitt ausgebildeten Anschlussstück entfällt somit die im Stand der Technik vorgesehene - kraftschlüssige - Anbindung des Anschlussstücks an das Schlauchende. Eine damit verbundene Beeinträchtigung des Strömungsverhaltens im Bereich des Anschlussstücks wird somit wirksam ausgeschlossen. Auf diese Weise werden entlang der gesamten Länge des Schlauches gleichmäßige Strömungsverhältnisse realisiert, wobei, vorzugsweise, ein maximaler Strömungsquerschnitt über die gesamte Länge des Schlauchs und insbesondere auch im Bereich des Anschlussstücks zur Verfügung steht. Dies ist insbesondere bei vergleichsweise dünnwandig ausgebildeten Schläuchen, beispielsweise mit einer Wandstärke im Bereich von 1 mm, besonders vorteilhaft, da es bei diesen beim aus dem Stand der Technik bekannten Verpressen mit einem Anschlussstück leicht zu einer Querschnittsverengung kommt. Überdies wird durch Verschweißen eine dauerhafte stoffschlüssige Verbindung zwischen dem Schlauchabschnitt und dem Anschlussstück ausgebildet, wodurch die Bildung von Leckagen ausgeschlossen werden kann.

Zudem ist herauszustellen, dass die Herstellung des Schlauchabschnitts und des Anschlussstücks aus einem Kunststoffmaterial kostengünstig und ressourcenschonend ist. Zur Ausbildung des erfindungsgemäßen Schlauchs werden neben dem Anschlussstück bzw. den Anschlussstücken und dem Schlauchabschnitt vorzugsweise keine weiteren Bauteile benötigt, wie beispielsweise Klemmen beim Verpressen des Anschlussstücks mit dem Schlauchabschnitt. Hierdurch lässt sich eine wenig aufwendige und kostengünstige Fertigung des erfindungsgemäßen Schlauchs erreichen.

Es ist weiter zu beachten, dass der Schlauchabschnitt an beiden Enden mit jeweils einem Anschlussstück verbunden sein kann.

Der Verwendungszweck des erfindungsgemäßen Schlauchs ist die Installation von Sanitärarmaturen bzw. im Sanitärbereich. In diesem Zusammenhang ist unter dem Begriff "Sanitärarmatur", wie er im Rahmen der vorliegenden Erfindung verwendet wird, eine vorzugsweise fest installierte oder bewegliche konstruktive Einrichtung zu verstehen, die beispielsweise im Haushaltsbereich zur bedarfsweisen Wasserentnahme ausgebildet ist. Insbesondere ist der vorgenannte Begriff breit zu verstehen. Beispiele für Sanitärarmaturen der eingangs genannten Art sind insbesondere ausgewählt aus der Gruppe der Armaturen für Waschtische und/oder der Duscharmaturen und/oder der Küchenarmaturen, insbesondere der Spültischarmaturen, und/oder der (Hand-)Brausen, insbesondere der Duschbrausen oder der Küchenbrausen. Der erfindungsgemäße Schlauch kann auch zum Anschluss an eine Geschirrspül- und/oder Waschmaschine ausgebildet und vorgesehen sein und ein entsprechend ausgebildetes Anschlussstück aufweisen.

Darüber hinaus ist unter dem Begriff "Anschlussstück", wie er im Rahmen der vorliegenden Erfindung verwendet wird, vorzugsweise ein Verbindungsteil zum dichtenden Anschließen eines Schlauchendes an ein komplementär ausgebildetes Anschlussstück einer Sanitärarmatur und/oder eines Eckventils und/oder eines Teils des (trink-)wasserführenden Systems zu verstehen. Dabei weist das Anschlussstück eine vorzugsweise herstellerspezifisch und/oder länderspezifisch und gegebenenfalls entsprechend üblicher Normen ausgebildete Anschlussgeometrie auf, um eine passgenaue bzw. dichtende Verbindung mit einem komplementär ausgebildeten Anschlussstück (mit entsprechend komplementärer Anschlussgeometrie) zu gewährleisten.

Der Schlauchabschnitt weist in axialer Richtung vorzugsweise eine wellenförmige Kontur auf. Die Wellenform ist dabei weiter vorzugsweise sinusförmig ausgebildet. Diese spezielle Wellenform begünstigt einen gleichmäßigen strömungsverlustarmen Wasserlauf durch den Schlauchabschnitt. Des Weiteren wird durch die wellenförmige Ausgestaltung des Schlauchabschnitts die Flexibilität bzw. Biegsamkeit des Schlauches deutlich verbessert bzw. in Abhängigkeit vom Schlauchmaterial überhaupt erst ermöglicht.

Generell ist anzumerken, dass das Anschlussstück des erfindungsgemäßen Schlauchs den an sich aus dem Stand der Technik bekannten Anschlussstücken aus Metall entsprechen kann, was insbesondere die Geometrie und Anschlusskonturen des Anschlussstücks, dessen Passgenauigkeit und/oder dessen Abdichtungsverhalten betreffen kann.

Ein Schlauchabschnitt kann bedarfsweise mit unterschiedlichen Anschlussstücken verbunden werden, die sich in Bezug auf die Geometrie und/oder Anschlusskonturen unterscheiden. So lässt sich mit einem gleich ausgebildeten Schlauchabschnitt bedarfsweise eine Vielzahl unterschiedlicher Wasserschläuche mit verschiedenen Anschlussgeometrien herstellen. Durch Verschweißen eines Schlauchabschnitts mit zwei unterschiedlich ausgebildeten Anschlussstücken an den Enden des Schlauchabschnitts lässt sich in einfacher Weise ein an einen bestimmten Einsatzfall angepasster Schlauch kostengünstig und innerhalb kurzer Zeit herstellen.

Gemäß einem ersten Aspekt der vorliegenden Erfindung weist der Schlauchabschnitt an wenigstens einem Ende einen Fügebereich mit einer vom übrigen Schlauchabschnitt abweichenden Innen- und/oder Außengeometrie aufweisen. Die Geometrie des Fügebereichs ist hierbei angepasst an die komplementäre Geometrie eines Fügebereichs des Anschlussstücks. Das Verbinden des Schlauchabschnitts mit dem Anschlussstück erfolgt dann in einer gemeinsamen Fügezone, die durch die komplementären Fügebereiche des Schlauchabschnitts und des Anschlussstücks gebildet und durch die Fügebereiche begrenzt wird.

Ein Fügebereich des Schlauchabschnitts kann vorzugsweise rohrförmig sein und einen kreisrunden Querschnitt aufweisen. Angrenzend zum Fügebereich kann der Schlauchabschnitt eine gewellte Innen- und/oder Außenkontur aufweisen. Der Fügebereich weist vorzugsweise eine Geometrie und/oder Größe derart auf, dass der Fügebereich des Schlauchabschnitts im Wesentlichen vollständig vom Fügebereich des Anschlussstücks aufgenommen werden kann. Nach dem Fügen kann dann der Fügebereich des Schlauchabschnitts von einem Betrachter des erfindungsgemäßen Schlauchs von außen nicht mehr visuell erkennbar sein.

In einer vorteilhaften Ausführungsform der Erfindung ist vorgesehen, dass der Schlauchabschnitt und das Anschlussstück durch Reibschweißen, vorzugsweise Rotationsreibschweißen, miteinander verbunden sind. Durch die Verbindung mittels Reibschweißen kann eine hohe Nahtfestigkeit erzielt werden. Dies ist insbesondere für wasserführende Systeme, die einem (hohen) Innendruck standhalten müssen, vorteilhaft. Des Weiteren werden beim Reibschweißverfahren verhältnismäßig niedrige Temperaturen an der Schweißnahtoberfläche erzeugt. Durch die geringe Schweißnahttemperatur kann ein Materialabbau des Kunststoffmaterials wirkungsvoll vermieden werden, was sich positiv auf die Nahtfestigkeit und damit auf die mechanischen Eigenschaften des Schlauches auswirkt.

Es ist auch möglich, dass der Schlauchabschnitt und das Anschlussstück durch andere Schweißverfahren, beispielsweise Ultraschallschweißen, miteinander verbunden sind. Eine Ultraschallschweißverbindung zeichnet sich beispielsweise durch eine kurze Schweißzeit bei einer gleichzeitig hohen Nahtfestigkeit aus. Somit eignet sich eine Verbindung durch Ultraschallschweißen insbesondere für hohe Stückzahlen.

In einer weiter vorteilhaften Ausführungsform ist vorgesehen, dass der Schlauchabschnitt und das Anschlussstück aus einem gleichen Kunststoffmaterial hergestellt sind und/oder bestehen. Dies erleichtert insbesondere das Verschweißen des Schlauchabschnitts mit dem Anschlussstück. Als Kunststoffe können insbesondere thermoplastische Kunststoffe eingesetzt werden. Der Einsatz eines gleichen Kunststoffs stellt eine optimale Verbindung der beiden Bauteile sicher, da die physikalischen und chemischen Eigenschaften beider Fügepartner dann übereinstimmen. So weisen der Schlauchabschnitt und das Anschlussstück vorzugsweise die gleiche Schmelztemperatur und die gleiche chemische Verträglichkeit auf. Es ist jedoch auch möglich, dass der Schlauchabschnitt und das Anschlussstück aus unterschiedlichen Kunststoffmaterialien bestehen. Dann sollten aber insbesondere die Schmelzbzw. Erweichungstemperaturen sowie die Polaritäten und Viskositäten der beiden Kunststoffe ähnlich sein, um eine ausreichend stabile Verbindung zwischen dem Schlauchabschnitt und dem Anschlussstück erzeugen zu können.

Bevorzugt weisen der Schlauchabschnitt und das Anschlussstück jeweils eine maximale Temperaturbeständigkeit von größer oder gleich 90 °C, vorzugsweise von größer oder gleich 95 °C, weiter vorzugsweise von größer oder gleich 100 °C, besonders bevorzugt von größer oder gleich 160 °C auf, und/oder eine maximale Temperaturbeständigkeit von weniger als 200 °C, vorzugsweise von weniger als 180 °C. Eine ausreichend hohe Temperaturbeständigkeit des erfindungsgemäßen Schlauchs lässt ein Durchspülen mit heißem Wasser zu, beispielsweise um Krankheitserreger und Keime abzutöten.

Die maximale Druckbeständigkeit des Schlauchabschnitts und des Anschlussstücks beträgt wenigstens 40 bar, vorzugsweise wenigstens 52 bar, weiter vorzugsweise 60 bar und/oder höchstens 80 bar. Auf diese Weise kann sichergestellt werden, dass der Schlauch für alle trinkwasserführenden Systeme, insbesondere für Systeme mit einem hohen Wasserdruck, eingesetzt werden kann. Darüber hinaus bietet der Schlauch dann eine ausreichende Sicherheit gegen ein überdruckbedingtes Aufplatzen, Leckagen oder andere Formen des Materialversagens.

Es ist vorgesehen, dass der Schlauchabschnitt durch ein Extrusionsverfahren und, vorzugsweise, das Anschlussstück durch ein Spritzgießverfahren hergestellt ist. Gerade für lange Schlauchabschnitte bietet das Extrusionsverfahren den Vorteil, dass die produzierten Schläuche keiner Längenbegrenzung unterliegen. Auch können mit einer Extrusionsanlage Schläuche mit verschiedenen Längen auf einfache Weise hergestellt werden.

Demgegenüber ist es vorteilhaft, wenn das Anschlussstück durch ein Spritzgießverfahren hergestellt ist. Durch Spritzgießen lässt sich eine Vielzahl von Anschlussstücken innerhalb kurzer Zeit kostengünstig herstellen. Gleichzeitig ist eine Nachbearbeitung der Anschlussstücke verfahrensbedingt nicht notwendig. Spritzgegossene Bauteile zeichnen sich insbesondere auch durch ihre kostengünstige Herstellung und einen geringen Materialabfall aus. Es ist jedoch auch möglich, das Anschlussstück durch ein anderes Herstellungsverfahren für Kunststoffbauteile, beispielsweise auch einem abtragenden Verfahren, herzustellen.

Im Zusammenhang mit Anforderungen an Prüfungsrichtlinien für druckfeste und flexible Schlauchleitungen für die Trinkwasserinstallation wird insbesondere auf die DIN EN 13618 und das Arbeitsblatt W 543 des Deutschen Vereins des Gas- und Wasserfaches (DVGW) verwiesen, wobei die dortigen Anforderungen durch den vorschlagsgemäßen Schlauch vorzugsweise vollumfänglich erfüllt werden.

Bevorzugt ist vorgesehen, dass der Schlauchabschnitt und das Anschlussstück für die Trinkwasserinstallation ausgebildet sind. Vorzugsweise erfüllt der Kunststoff des Schlauchabschnitts und der Kunststoff des Anschlussstücks die Materialzulassungen ACS, DM 174 /2004, Kiwa Water Mark, WRAS, DVGW KTW und/oder DVGW W 270. Unter dem Begriff "Kiwa Water Mark" ist eine toxologische, mikrobiologische und hygienische Prüfung für wasserführende Systeme zu verstehen, die in den Niederlanden vorgenommen wird. Unter dem Begriff "WRAS" versteht der Fachmann eine mikrobiologische und hygienische Prüfung Großbritanniens für Werkstoffe und Produkte, die mit Trinkwasser in Kontakt stehen. In der französischen Prüfnorm "ACS" sind die Anforderungen an eine hygienische Prüfung von mit Trinkwasser in Kontakt kommenden Werkstoffen definiert. Der Begriff "DVGW KTW" bezeichnet eine deutsche Leitlinie zur hygienischen Beurteilung von organischen Materialien im Kontakt mit Trinkwasser. In Deutschland werden Werkstoffe und Produkte, die in Kontakt mit Trinkwasser stehen, im Hinblick auf die Migration chemischer Substanzen und das Wachstum von Mikroorganismen gemäß der Vorgabe "DVGW W 270" geprüft. In der italienischen Norm "DM 174/2004" sind die gesetzlichen Vorgaben dargelegt über Materialien und Gegenstände, die für die stationäre Sammlung, Behandlung, Bereitstellung und Verteilung von Wasser für den menschlichen Gebrauch verwendet werden können. Durch die Erfüllung der vorgenannten (Prüf-)Normen, Leitlinien und Arbeitsblätter kann der erfindungsgemäße Schlauch weltweit in trinkwasserführenden Systemen eingesetzt werden.

In einer vorteilhaften Ausführungsform der Erfindung weist der Schlauchabschnitt an beiden Enden jeweils einen Fügebereich auf. Der Fügebereich kann in Längsrichtung rotationssymmetrisch ausgebildet sein und eine im Wesentlichen axialen Stirnfläche, eine im Wesentlichen radiale Innenfläche und eine im Wesentlichen radiale Außenfläche aufweisen. Der Füge- bzw. Verbindungsbereich kann vorzugsweise durch einen rohrförmigen nicht-gewellten Endbereich des Schlauchabschnitts gebildet sein, so dass eine große Fügefläche für die Verbindung mit dem Anschlussstück zur Verfügung steht. Aufgrund der großen Fügefläche kann beim Verbinden insbesondere durch Reibschweißen eine feste und stabile Verbindung erzeugt werden, die im Wesentlichen der Festigkeit des eingesetzten Werkstoffs, also des Kunststoffmaterials, entspricht.

Der Fügebereich des Anschlussstücks kann durch eine rotationssymmetrische axiale Aufnahmenut gebildet werden, deren Geometrie und Abmessungen an den Fügebereich des Schlauchabschnitts angepasst sind. Zwischen einem radial außenliegenden hülsenförmigen bzw. zylindrischen Wandabschnitt der Aufnahmenut und einem radial innenliegenden hülsenförmigen bzw. zylindrischen weiteren Wandabschnitt der Aufnahmenut kann ein Aufnahme- bzw. Einsteckbereich für ein Schlauchende beim Verbinden des Anschlussstücks mit dem Schlauchende gebildet sein. Der Füge- bzw. Verbindungsbereich am Schlauchende des Schlauchabschnitts kann in diesem Zusammenhang vorzugsweise hohlzylindrisch bzw. rohrförmig ausgebildet sein mit einem kreisförmigen Querschnitt und vorzugsweise nicht-gewellten radialen Innenflächen und nicht-gewellten radialen Außenflächen. Die Anschlussgeometrie des Anschlussstücks ist damit komplementär zur Anschlussgeometrie des Füge- bzw. Verbindungsbereichs am Schlauchende ausgebildet. Das Schlauchende des Schlauchabschnitts kann so auf einfache Weise in die Aufnahmenut des Anschlussstücks eingeschoben und/oder eingeführt werden. Die Fügezone liegt dann im Bereich der Aufnahmenut und wird, vorzugsweise, durch die hülsenförmigen Wandabschnitte radial nach außen und innen begrenzt.

Vorzugsweise können der Schlauchabschnitt und das Anschlussstück durch Rotationsreibschweißen miteinander verbunden werden, wobei beispielsweise das Anschlussstück rotiert, während der Schlauchabschnitt unter einem definierten Druck gegen das Anschlussstück gepresst wird. Das Material schmilzt aufgrund der Reibung im Bereich der Fügezone auf, in der ein berührender Kontakt zwischen dem Schlauchende und dem Anschlussstück vorliegt. Vorzugsweise schmilzt das Material somit im Bereich des Schlauchendes und im Bereich der Aufnahmenut auf. Ist ein bestimmtes Materialvolumen aufgeschmolzen, kann die Rotation des Anschlussstücks beendet werden und das Material kann vorzugsweise unter Beibehaltung des Anpressdrucks abkühlen und erstarren. Damit wird eine stoffschlüssige Verbindung zwischen dem Schlauchabschnitt und dem Anschlussstück erreicht. Die Fügefläche zwischen dem Anschlussstück und dem Schlauchabschnitt kann auf diese Weise großflächiger als bei einer Stumpfverbindung ausgebildet werden, wodurch die Festigkeit der Verbindung vergrößert wird. Vorzugsweise liegt die Festigkeit der Verbindung im Bereich der Festigkeit der eingesetzten Materialien des Schlauchabschnitts und des Anschlussstücks.

Beim Verbinden des Anschlussstücks mit dem Schlauchabschnitt durch Schweißen werden die Verfahrensparameter des Schweißvorgangs, wie Schweißtemperatur, Anpressdruck und Dauer des Schweißvorgangs, so gewählt, dass sich die Schweißbereiche radial vorzugsweise nicht bis an die Außen- und/oder Innenflächen des Anschlussstücks erstrecken. Weist das Anschlussstück eine Aufnahmenut für ein Schlauchende des Schlauchabschnitts auf, können sich Schweißbereiche, in denen das Kunststoffmaterial aufschmilzt und seine Form ändert, radial nach außen lediglich über einen Teilbereich des äußeren Wandabschnitts und/oder radial nach innen lediglich über einen Teilbereich des weiteren inneren Wandabschnitts der Aufnahmenut erstrecken. Während des Schweißvorgangs schmilzt das Kunststoffmaterial dann vorzugsweise nur in jeweils einem Teilbereich des inneren und äußeren Wandabschnitts der Aufnahmenut auf, so dass die Innenfläche des inneren Wandabschnitts und die Außenfläche des äußeren Wandabschnitts der Aufnahmenut bevorzugt form- und lagestabil bleiben. Mit anderen Worten erstreckt sich die Füge- und Verformungszone nicht bis in den Bereich der Außen- und/oder Innenfläche des Anschlussstücks. Damit wird nach außen hin ein sehr ansprechendes ästhetisches Erscheinungsbild des Anschlussstücks mit vorzugsweise zylindrischer Außengeometrie erreicht und nach innen hin sichergestellt, dass der Wasserfluss durch das Anschlussstück im Bereich der Aufnahmenut nicht durch eine Materialverformung negativ beeinflusst ist.

Vorzugsweise ist an einem anderen Ende des Schlauchabschnitts, insbesondere dem Ende, das dem Ende mit gefügten Anschlussstück gegenüber liegt, ein weiteres Anschlussstück gebildet. Dieses weitere Anschlussstück kann ebenfalls durch Fügen mit dem anderen Schlauchende dauerhaft verbunden sein.

Gemäß einem weiteren Aspekt der vorliegenden Erfindung, der auch unabhängig realisiert sein kann, ist das weitere Anschlussstück vom Schlauchabschnitt gebildet bzw. einstückig mit dem Schlauchabschnitt gebildet, durch Extrusion des Schlauchabschnitts und Anschlussstücks in einem gemeinsamen, bevorzugt kontinuierlichen und/oder ununterbrochenen, Extrusionsprozess. Insbesondere ist an einem Ende des Schlauchabschnitts ein Anschlussstück durch Fügen dauerhaft befestigt und am anderen Ende des Schlauchabschnitts ein weiteres Anschlussstück direkt vom Schlauchabschnitt gebildet.

Hierdurch wird eine besonders einfache und kostengünstige Herstellung des Schlauchs ermöglicht. Insbesondere können in einem Endlosprozess Schlauchabschnitte hergestellt, insbesondere extrudiert, werden, die an einem Ende bereits ein Anschlussstück aufweisen. Das andere Ende des jeweiligen Schlauchabschnitts kann dann durch Fügen ebenfalls mit einem Anschlussstück versehen werden. Dies hat den Vorteil, dass an einem Ende ein universelles Anschlussstück durch Extrusion vorgesehen werden kann, während das andere Ende durch Verbinden mit einem individuellen Anschlussstück in einem Fügeprozess an eine passende Anschlussgeometrie adaptiert werden kann. So kann beispielsweise das extrudierte Anschlussstück für den Anschluss an ein (normiertes) Anschlussstück einer Wasserversorgungsleitung bzw. eines Eckventils ausgebildet sein, während das gefügte Anschlussstück zum Anschluss an einen bestimmten Abnehmer, wie eine Sanitärarmatur, Geschirrspül- und/oder Waschmaschine, ausgebildet ist.

Vorzugsweise weist der Schlauch einen Überwurfring zum Anschluss des Schlauchs an ein Abnehmer, oder, besonders bevorzugt, eine Wasserversorgungsleitung auf. Besonders bevorzugt ist der Überwurfring eine Überwurfmutter.

Das gefügte Anschlussstück oder eine Schulter, die von dem Anschlussstück gebildet ist, verhindert vorzugsweise ein Entfernen des Überwurfrings vom Schlauchabschnitt bzw. Schlauchende bzw. bildet einen Anschlag für den Überwurfring und/oder sichert den Überwurfring gegen Abnehmen.

Besonders bevorzugt ist der Überwurfring unverlierbar bzw. unlösbar am Schlauch bzw. Schlauchabschnitt gehalten.

Vorzugsweise weist der Schlauch an beiden Enden ein Anschlussstück auf, die jeweils eine Schulter bzw. einen Anschlag für den Überwurfring bilden, so dass der Überwurfring an beiden Enden des Schlauchs bzw. Schlauchabschnitts gegen ein Abnehmen bzw. Entfernen gesichert ist. Hierbei können die Anschlussstücke jeweils durch Fügen mit dem Schlauchabschnitt verbunden sein oder, besonders bevorzugt, eines der beiden Anschlussstücke ist zusammen mit dem Schlauchabschnitt durch Extrusion hergestellt.

Durch den Überwurfring wird auf besonders einfache und kostengünstige Weise ein Anschluss des Schlauchs ermöglicht. Insbesondere kann eines der beiden Anschlussstücke, vorzugsweise ein mit dem Schlauchabschnitt extrudiertes Anschlussstück, lediglich eine Schulter bzw. ein Anschlag für den Überwurfring bilden, insbesondere zum Verspannen des Überwurfrings beim Anschluss, insbesondere an eine Wasserversorgungsleitung oder einen Abnehmer.

Es ist auch möglich, zwei Überwurfringe an dem Schlauch bzw. Schlauchabschnitt vorzusehen. Vorzugsweise ist ein Überwurfring zum Anschluss an eine Wasserversorgung ausgebildet und der andere Überwurfring zum Anschluss an einen Abnehmer wie eine Armatur, eine Geschirrspül- und/oder eine Waschmaschine. Insbesondere sind an den Enden des Schlauchs bzw. Schlauchabschnitts durch die jeweiligen Anschlussstücke Schultern bzw. Anschläge gebildet, wobei eine Schulter dem Verspannen des einen Überwurfrings und die andere Schulter dem Verspannen des anderen Überwurfrings dient.

An einem axialen Ende des Anschlussstücks ist vorzugsweise eine rotationssymmetrisch ausgebildete axiale Aufnahmenut für ein Schlauchende des Schlauchabschnitts vorgesehen, wobei zwischen einem radial außenliegenden Wandabschnitt der Aufnahmenut und einem radial innenliegenden Wandabschnitt der Aufnahmenut eine Fügezone für das Schlauchende beim Fügen des Anschlussstücks und des Schlauchendes, insbesondere durch Reibschweißen, gebildet wird. Im Bereich der Fügezone kommt es zu einem Aufschmelzen des Schlauchendes und des Anschlussstücks, zumindest bereichsweise, so dass das Schlauchende und das Anschlussstück im Bereich der Aufnahmenut dauerhaft verbunden (gefügt) werden. Es versteht sich, dass das Schlauchende bei einer alternativen Ausführungsform der Erfindung auch in die Aufnahmenut eingeklebt sein kann.

Bei der Ausbildung des Fügebereichs des Anschlussstücks als Aufnahmenut für ein Schlauchende ist es zweckmäßig, wenn die Wanddicke eines innenliegenden Wandabschnitts der Aufnahmenut größer ist als die Wanddicke eines außenliegenden Wandabschnitts der Aufnahmenut, wobei, vorzugsweise, die Wanddicke des innenliegenden Wandabschnitts wenigstens der zweifachen Wanddicke des außenliegenden Wandabschnitts entspricht. Durch die größere Wanddicke des innenliegenden Wandabschnitts kann sichergestellt werden, dass es beim Verbinden durch Schwei-βen im Bereich des innenliegenden Wandabschnitts zu keinen Verzugserscheinungen und/oder Materialverformungen beim Schweißvorgang kommt, so dass die innere Querschnittsgeometrie des Anschlussstücks beim Schweißvorgang nicht verändert wird. Auf diese Weise kann ein strömungstechnisch optimierter Wasserfluss durch das Anschlussstück auch im Verbindungsbereich mit dem Schlauchende gewährleistet werden.

In einer bevorzugten Ausführungsform kann die Breite einer Aufnahmenut des Anschlussstücks in axialer Richtung von einer dem Schlauchende zugewandten Öffnung der Aufnahmenut in Richtung zum Nutgrund abnehmen. Vorzugsweise nimmt die Breite der Aufnahmenut in axialer Richtung gestuft ab. Dabei kann eine Abnahme von einer ersten Breite auf eine zweite Breite über eine schräge oder konische Übergangsfläche erfolgen. Vor dem Verbinden durch Fügen kann der Schlauchabschnitt derart in die Aufnahmenut eingeführt werden, dass eine Stirnfläche des Schlauchendes gegen die Übergangsfläche anliegt. Damit ist eine lagestabile Anordnung des Schlauchendes relativ zum Anschlussstück für den Fügevorgang sichergestellt. Beim Fügen durch Schweißen kann das Material des Schlauchendes und das Material des Anschlussstücks im Bereich der Aufnahmenut während des Schweißvorgangs aufschmelzen, wobei dann das Schlauchende unter Druck tiefer in die Aufnahmenut eingeführt werden und die Aufnahmenut vorzugsweise im Wesentlichen vollständig ausfüllen kann. Auf diese Weise kann die Fügefläche zwischen dem Schlauchabschnitt und dem Anschlussstück vergrößert und somit die Festigkeit der Verbindung weiter verbessert werden.

Im Übrigen kann das Anschlussstück, insbesondere in einem Übergangsbereich zum Schlauchabschnitt, einen größeren Innendurchmesser und/oder Strömungsquerschnitt als der Schlauchabschnitt aufweisen. Dies gestattet einen optimalen Zu- und/oder Abfluss im Bereich der Schlauchenden.

Bevorzugt weist der Schlauch, insbesondere der Schlauchabschnitt, einen Innendurchmesser von wenigstens 5 mm, vorzugsweise von wenigstens 6 mm, besonders bevorzugt von wenigstens 7 mm, und/oder von höchstens 20 mm, vorzugsweise von höchstens 15 mm, weiter vorzugsweise von höchstens 10 mm, besonders bevorzugt von beispielsweise 8 mm, auf. Grundsätzlich sind aber auch größere Innendurchmesser nicht ausgeschlossen.

Vorzugsweise kann der Schlauchabschnitt eine Wandstärke im Bereich von 0,5 mm bis 5 mm, vorzugsweise im Bereich von 0,6 mm bis 4 mm, bevorzugt im Bereich von 0,7 mm bis 3 mm, besonders bevorzugt im Bereich von 0,8 mm bis 2 mm, aufweisen. Grundsätzlich sind aber auch größere Wanddicken nicht ausgeschlossen.

Insbesondere weist der erfindungsgemäße Schlauch eine Zugfestigkeit nach DIN EN 1113 von wenigstens 300 N, vorzugsweise von wenigstens 400 N, besonders bevorzugt von wenigstens 500 N, auf.

Vorzugsweise wird als Material für den Schlauchabschnitt und die Anschlussstücke Polyphenylsulfon (PPSU) verwendet. Dieses Material zeichnet sich insbesondere durch seine hohe Dauertemperaturbeständigkeit von deutlich mehr als 100 °C aus. Aufgrund der geringen Permeabilität für Wasser eignet sich dieser Kunststoff insbesondere für den Einsatz in Sanitär- oder Armaturenbereich. PPSU ist aufgrund seiner hohen Härte als Metallersatz geeignet. Somit wird insbesondere für die Anschlussstücke eine hohe Formstabilität erreicht.

Insbesondere ist die Härte von PPSU derart hoch, dass für eine ausreichend hohe Flexibilität des Wasserschlauches eine wellenförmige Gestaltung, vorzugsweise sinusförmig, vorgesehen sein kann.

Es ist jedoch auch möglich, ein anderes Material mit ähnlichen Eigenschaften wie PPSU, insbesondere im Hinblick auf Temperaturbeständigkeit, Härte, Festigkeit, und/oder (Druck-)Stabilität, zu verwenden.

Generell ist das für den Schlauch verwendete Material vorzugsweise ein Hochleistungskunststoff und/oder weist eine, im Vergleich zu Standardkunststoffen, wie Kunststoffen aus der Familie der Polyolefine, erhöhte Temperaturbeständigkeit und/oder mechanische Festigkeit auf.

Der Begriff "Hochleistungskunststoffe" im Sinne der vorliegenden Erfindung bezeichnet vorzugsweise eine Gruppe von Kunststoffen, die sich durch besonders hohe Temperaturbeständigkeit und/oder mechanische Festigkeit auszeichnen, insbesondere wie in RÖMPP Lexikon Chemie, 10. Auflage, 1996-1999, Band 3: H-L definiert. Insbesondere zählen zu den Hochleistungskunststoffen Materialien aus den Familien der Polyarylate, Polyetherimide, Polyetherketone, Polysulfone, Polyphenylensulfide und/oder Polyacrylimide.

Vorzugsweise ist der Schlauch aus einem Kunststoff, der aromatische Strukturen bzw. Aromaten enthält, hergestellt. Besonders bevorzugt wird für den Schlauch ein Material aus der Familie der Polysulfone, beispielsweise Polyarylensulfon (PAS), Polyethersulfon (PES), Polysulfon (PSU) und/oder Polyphenylsulfon (PPSU), verwendet.

Bei geringeren Anforderungen an die Dauertemperaturbeständigkeit sowie die Festigkeit bzw. Druckstabilität des Schlauches können beispielsweise auch Materialien aus der Familie der Poleamide oder Polyolefine, insbesondere Polyamid 12, Polypropylen und/oder Polyethylen, zur Herstellung des Schlauchs verwendet werden.

Ein weiterer Gegenstand der vorliegenden Erfindung betrifft ein Verfahren zur Herstellung eines Schlauchs ausgebildet zur Wasserleitung, insbesondere zur Trinkwasserleitung in einem trinkwasserführenden System, und ausgebildet zum Anschluss an eine Sanitärarmatur, insbesondere ausgewählt aus der Gruppe der Waschtisch- und/oder Dusch- und/oder der Küchenarmaturen, weiter insbesondere der Spültischarmaturen, und/oder der (Hand-)Brausen, wie Duschbrausen und/oder Küchenbrausen, und/oder ausgebildet zum Anschluss an eine Geschirrspül- und/oder Waschmaschine, mit einem vorzugsweise gewellten Schlauchabschnitt aus Kunststoff.

Es ist vorgesehen, dass der Schlauchabschnitt an wenigstens einem Ende mit einem abweichend zum Schlauchabschnitt ausgebildeten Anschlussstück aus Kunststoff durch fertigungstechnisches Fügen dauerhaft verbunden wird. Insbesondere wird der Schlauchabschnitt mit dem Anschlussstück verschweißt. Das Anschlussstück ist dabei zur Verbindung des Schlauchs mit einem komplementär ausgebildeten Anschlussstück einer Sanitärarmatur oder einer Geschirrspül- und/oder Waschmaschine ausgebildet. Auf diese Weise lassen sich die zuvor erläuterten Vorteile des erfindungsgemäßen Schlauchs entsprechend realisieren.

Bevorzugt werden der Schlauchabschnitt und das Anschlussstück miteinander reibverschweißt. Vorzugsweise werden der Schlauchabschnitt und das Anschlussstück in einem Rotationsreibschweißverfahren miteinander gefügt. Für den Rotationsreibschweißprozess muss ein Fügepartner in der Fügezone eine rotationssymmetrische Gestalt aufweisen, vorzugsweise beide Fügepartner. Die Energiezufuhr wird ausschließlich durch eine Relativbewegung der Fügeteile zueinander unter Druck eingebracht. Dabei wird in der Regel ein Fügepartner in Rotation versetzt, während der andere Fügepartner nicht rotiert. Das rotierende Bauteil, vorzugsweise das Anschlussstück, wird in einer rotierenden Spindel gehalten. Vorzugsweise wird der Schlauchabschnitt von einem nicht-rotierenden Gegenstück gehalten, dass auf einem axial zustellbaren Schlitten gespannt sein kann. Durch den axial zustellbaren Schlitten wird der Schlauchabschnitt gegen das rotierende Anschlussstück gepresst. Dabei kommt es durch Reibeffekte zur Erwärmung des Materials in der Fügezone, genauer im Bereich sich berührender Flächen, wobei der Kunststoff im Bereich der Fügezone aufschmilzt. Ist genügend Material aufgeschmolzen, wird das rotierende Anschlussstück angehalten, wobei das geschmolzene Material unter Beibehaltung des Anpressdrucks wieder erstarrt. Auf diese Weise wird eine stoffschlüssige Verbindung zwischen dem Anschlussstück und dem Schlauchabschnitt erzeugt.

Als Werkzeuge können negative Konturbacken verwendet werden, mit welchen die zu schweißenden Bauteile arretiert werden. Vorteilhaft an dem Verfahren ist, dass keine Zusatzwerkstoffe notwendig sind. Gleichzeitig kann eine hohe Festigkeit der stoffschlüssigen Verbindung erzielt werden. Die Temperaturen auf der Schweißnahtoberfläche sind beim Rotationsschweißverfahren relativ niedrig, weshalb Verzugserscheinungen und Materialabbaueffekte wirksam verhindert werden können. Darüber hinaus ist auch das Fügen eines breiten Spektrums von Bauteilen mit unterschiedlichen Kunststoffen möglich. Im Vergleich zu anderen Schweißverfahren wird kein Schutzgas benötigt, wodurch das Fügeverfahren vereinfacht wird und Schutzmaßnahmen gegen das Schutzgas für Arbeiterinnen und Arbeiter nicht notwendig sind. Der Prozessablauf und der Maschinenaufbau der Schweißvorrichtung können auf diese Weise einfach gehalten werden.

In Abhängigkeit der verwendeten Kunststoffe bzw. des verwendeten Kunststoffs spielen werden die Prozessparameter so gewählt, dass eine bestmögliche Nahtqualität und Verbindung zwischen dem Schlauchabschnitt und dem Anschlussstück erreicht wird. Neben der Rotationsgeschwindigkeit des rotierenden Bauteils ist auch der Fügedruck sowie die Zeit zum Abbremsen des rotierenden Bauteils von Bedeutung.

Es sind jedoch grundsätzlich auch andere Kunststoffschweißverfahren möglich. So kann es beispielsweise vorteilhaft sein, dass der Schlauchabschnitt und das Anschlussstück miteinander ultraschallverschweißt werden. Durch den Einsatz eines Ultraschallschweißverfahrens kann eine geringe Prozesszeit erreicht werden. Hierfür können die Fügeflächen keilförmig ausgebildet sein, um den Energieeintrag auf eine kleine Fläche bzw. ein geringes Volumen zu konzentrieren, damit das Material im Fügebereich schnell aufschmilzt.

Gemäß einem weiteren Aspekt der vorliegenden Erfindung, der auch unabhängig realisiert sein kann, wird der Schlauchabschnitt zunächst in einem Extusionsverfahren hergestellt, wobei an dem Schlauchabschnitt der vorschlagsgemäße Fügebereich gebildet wird, insbesondere im gleichen Extrusionprozess. Anschließend werden der Schlauchabschnitt und das Anschlussstück im Fügebereich durch Fügen dauerhaft miteinander verbunden. Hierdurch werden entsprechende Vorteile erzielt. Insbesondere erlaubt die Ausbildung des Fügebereichs, der abweichend von der restlichen, insbesondere gewellten, Geometrie des Schlauchabschnitts ausgebildet ist, eine besonders sichere und feste Fügeverbindung.

Zwischen dem Extrudieren des Schlauchabschnitts und dem Fügen des Schlauchabschnitts und des Anschlussstücks können jedoch noch weitere Verfahrensschritte durchgeführt werden, beispielsweise das Führen des Schlauchabschnitts durch einen Überwurfring.

An einem anderen Ende des Schlauchabschnitts, das vorzugsweise dem Schlauchende mit Fügebereich bzw. gefügtem Anschlussstück gegenüberliegt, ist vorzugsweise ein weiteres Anschlussstück vorgesehen. Das weitere Anschlussstück kann ebenfalls durch Fügen mit dem Schlauchabschnitt verbunden werden. Vorzugsweise ist in diesem Fall am anderen Ende ein weiterer Fügebereich gebildet. Besonders bevorzugt ist der weitere Fügebereich einstückig mit dem Schlauchabschnitt durch Extrusion gebildet.

Gemäß einem weiteren Aspekt der vorliegenden Erfindung, der auch unabhängig realisiert sein kann, werden der Schlauchabschnitt und das weitere Anschlussstück einstückig durch Extrusion in einem gemeinsamen, bevorzugt kontinuierlichen und/oder ununterbrochenen, Extrusionsprozess hergestellt. Insbesondere wird ein Anschlussstück mit dem Schlauchabschnitt gefügt und ein weiteres Anschlussstück zusammen mit dem Schlauchabschnitt durch Extrusion hergestellt. Hierdurch lassen sich entsprechende Vorteile erzielen.

Insbesondere wird in einem ersten Verfahrensschritt der Schlauchabschnitt mit dem weiteren Anschlussstück extrudiert. Besonders bevorzugt wird der Schlauchabschnitt mit dem weiteren Anschlussstück und dem Fügebereich extrudiert, wobei das weitere Anschlussstück und der Fügebereich an gegenüberliegenden Enden des Schlauchabschnitts angeordnet sind. In einem weiteren Schritt wird dann ein Anschlussstück am dem weiteren Anschlussstück gegenüberliegenden Ende, insbesondere im Fügebereich, durch Fügen befestigt.

Vorzugsweise wird der Schlauch mit einem oder mehreren Überwurfringen hergestellt. Der Schlauchabschnitt wird durch den bzw. die Überwurfring(e) geführt und anschließend wird das Anschlussstück an den Schlauchabschnitt gefügt. Hierdurch wird ein Entfernen des Überwurfrings vom Schlauchabschnitt, insbesondere an dem Ende an dem das Anschlussstück gefügt wurde, verhindert.

Vorzugsweise ist ein Entfernen des Überwurfrings an dem anderen Ende des Schlauchabschnitts ebenfalls verhindert. Hierzu weist der Schlauch bzw. Schlauchabschnitt vorzugsweise das weitere Anschlussstück auf. Das weitere Anschlussstück ist vorzugsweise bereits vor dem Führen des Schlauchabschnitts durch den/die Überwurfring(e) am Schlauchabschnitt gebildet. Besonders bevorzugt ist das weitere Anschlussstück in einem gemeinsamen, bevorzugt kontinuierlichen und/oder ununterbrochenen, Extrusionsprozess mit dem Schlauchabschnitt gebildet. Alternativ kann das weitere Anschlussstück durch Fügen mit dem Schlauchabschnitt verbunden sein, wobei vorzugsweise das Fügen des weiteren Anschlussstücks erfolgt, bevor der Schlauchabschnitt durch den bzw. die Überwurfring(e) geführt wird.

Es wird somit ein besonders einfaches Herstellungsverfahren vorgeschlagen, bei dem ein einfaches Anbringen des bzw. der Überwurfring(e) am Schlauchabschnitt ermöglicht wird und eine Sicherung am Schlauchabschnitt gewährleistet ist. Insbesondere sind am fertigen Schlauch an beiden Enden dauerhaft mit dem Schlauchabschnitt verbundene Anschlussstücke gebildet, die ein Entfernen des/der Überwurfring(e) verhindern bzw. Schultern oder Anschläge für den/die Überwurfring(e) bilden.

Ein weiterer Gegenstand der Erfindung betrifft eine Verwendung eines Schlauchs mit einem vorzugsweise gewellten Schlauchabschnitt aus Kunststoff und mit wenigstens einem endseitig mit dem Schlauchabschnitt durch Fügen, insbesondere Schweißen oder auch Kleben, dauerhaft verbundenen und abweichend zum Schlauchabschnitt ausgebildeten Anschlussstück aus Kunststoff in einem wasser-, insbesondere trinkwasserführenden System, wobei das Anschlussstück ausgebildet ist zur Verbindung des Schlauchabschnitts mit einem komplementär ausgebildeten Anschlussstück einer Sanitärarmatur oder einer Geschirrspül- und/oder Waschmaschine.

Weitere Vorteile, Merkmale, Eigenschaften und Aspekte der vorliegenden Erfindung ergeben sich aus den Ansprüchen und der folgenden Beschreibung bevorzugter Ausführungsformen anhand der Zeichnung. Die beschriebenen und/oder gezeigten Vorteile, Merkmale, Eigenschaften und Aspekte der vorliegenden Erfindung lassen sich bedarfsweise miteinander kombinieren, auch wenn diese nicht im Einzelnen beschrieben oder gezeigt sind. Angegebene Wertebereiche umfassen alle ganzzahligen Zwischenwerte.

In der Zeichnung zeigt
- Fig. 1: eine Seitenansicht eines erfindungsgemäßen Schlauchs mit einem gewellten Schlauchabschnitt und einem Anschlussstück an einem Ende des Schlauchabschnitts,
- Fig. 2: einen Längsschnitt des in Fig. 1 gezeigten Schlauchs in einer vergrößerten Ansicht, wobei der Schlauchabschnitt des Schlauchs verkürzt dargestellt ist und wobei der Schlauchabschnitt und das Anschlussstück durch Schweiβen miteinander dauerhaft verbunden sind,
- Fig. 3: einen Längsschnitt des in Fig. 1 gezeigten Schlauchs in einer vergrößerten Ansicht, wobei der Schlauchabschnitt des Schlauchs verkürzt dargestellt ist, vor dem Verbinden des Schlauchabschnitts und des Anschlussstücks durch Verschweißen,
- Fig. 4: einen Längsschnitt des in Fig. 1 gezeigten Schlauchabschnitts in einer vergrößerten Ansicht, wobei der Schlauchabschnitt des Schlauchs verkürzt dargestellt ist,
- Fig. 5: eine perspektivische Ansicht des Anschlussstücks aus Fig. 1 vor dem Verbinden mit dem Schlauchabschnitt,
- Fig. 6: einen Längsschnitt des in Fig. 1 gezeigten Anschlussstücks in einer vergrößerten Ansicht,
- Fig. 7: einen Längsschnitt des Schlauchs gemäß einer zweiten Ausführungsform, und
- Fig. 8: einen Längsschnitt des in Fig. 7 gezeigten Schlauchs in einer vergrößerten Ansicht im Bereich eines zweiten Schlauchendes.

Bei der nachfolgenden Beschreibung werden für gleiche und gleichartige Bauteile und Komponenten dieselben Bezugszeichen verwendet, wobei sich entsprechende Eigenschaften und Merkmale ergeben, auch wenn keine wiederholte Beschreibung erfolgt.

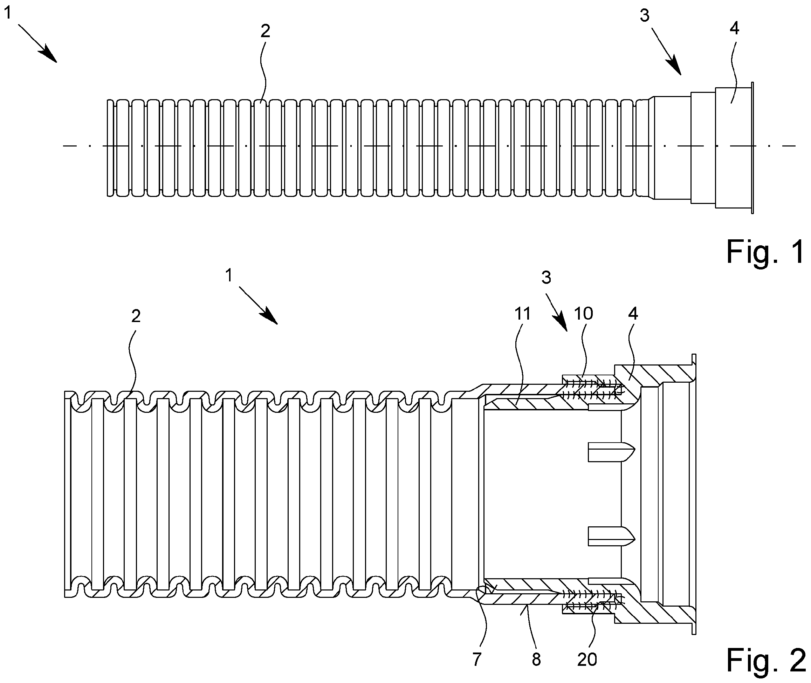

Fig. 1 zeigt in einer Seitenansicht einen erfindungsgemäßen Schlauch 1 zur Trinkwasserleitung in einem (nicht dargestellten) trinkwasserführenden System. Beispielsweise ist der Schlauch 1 zum Anschließen von Sanitärarmaturen und/oder zum Anschluss einer Geschirrspül- und/oder Waschmaschine an eine Wasserversorgungsleitung, insbesondere ein Eckventil, ausgebildet. Der Schlauch 1 ist insbesondere ein Druckschlauch.

Der Schlauch 1 ist vorzugsweise zum Anschluss an einen Abnehmer einerseits und eine Wasserversorgung, insbesondere ein Ventil, andererseits ausgebildet. Insbesondere verbindet der Schlauch 1 den Abnehmer mit der Wasserversorgung bzw. dem Ventil.

Die Wasserversorgung ist vorzugsweise eine (Haupt-)Wasserleitung, ein Heizkessel oder dergleichen.

Das Ventil ist vorzugsweise ein Eckventil. Grundsätzlich kann das Ventil jedoch auch anders ausgebildet sein, beispielsweise als Kugelventil.

Der Abnehmer ist vorzugsweise eine Einrichtung, der über den Schlauch 1 Wasser, insbesondere von der Wasserversorgung, zuführbar ist. Besonders bevorzugt handelt es sich bei dem Abnehmer um eine Armatur, insbesondere eine Sanitärarmatur.

Beispielsweise kann eine Handbrause bzw. ein Brausekopf einen Abnehmer bilden. Vorzugsweise bildet die Handbrause bzw. der Brausekopf eine Armatur oder ist Teil einer Armatur.

Besonders bevorzugt bildet Schlauch 1 zusammen mit dem Abnehmer, beispielsweise einem Brausekopf, eine Armatur und/oder eine Handbrause oder einen Teil einer Armatur und/oder Handbrause.

Vorzugsweise bildet der Abnehmer einen Wasserauslass bzw. -auslauf. Es ist jedoch auch möglich, dass der Abnehmer eine Einrichtung ist, die mit Wasser versorgt werden soll, beispielsweise eine Waschmaschine oder eine Geschirrspülmaschine.

Auch ist es möglich, dass der Schlauch 1 (direkt) einen Wasserauslass bzw. Wasserauslauf bildet.

Vorzugsweise ist der Schlauch 1 und/oder der Abnehmer in einer Aufnahme gehalten oder aufgenommen und bei Bedarf zumindest teilweise aus der Aufnahme herausziehbar. Beispielsweise kann der Schlauch 1 Teil einer Spültischarmatur sein, wobei der Schlauch 1 an einen Auslauf, insbesondere einen Brausekopf, angeschlossen ist oder einen solchen bildet. Zur Benutzung der Armatur kann der Schlauch 1 (teilweise) aus der Aufnahme gezogen werden, so dass der Benutzungsradius erhöht werden kann.

Fig. 2 zeigt einen vergrößerten Längsschicht eines Schlauchendes 3 des erfindungsgemäßen Schlauchs gemäß Fig. 1, wobei der Schlauch 1 lediglich über eine Teillänge dargestellt ist.

Der Schlauch 1 weist einen, vorzugsweise gewellten, Schlauchabschnitt 2 für ein trinkwasserführendes System zur Führung eines Trinkwasserstroms auf. Wie sich aus den Fig. 1 und 2 ergibt, ist an einem Schlauchende 3 ein Anschlussstück 4 vorgesehen. Dabei ist das Anschlussstück 4 beispielsweise zur Verbindung des Schlauchendes 3 mit einem komplementär ausgebildeten Anschlussstück einer Sanitärarmatur oder zur Verbindung mit einem komplementär ausgebildeten Anschlussstück einer Wasserversorgungsleitung, insbesondere eines Eckventils, ausgebildet.

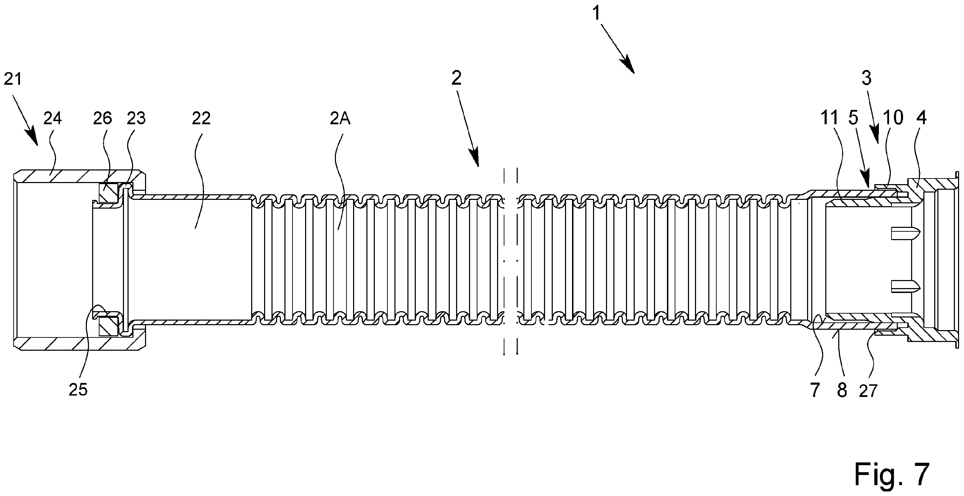

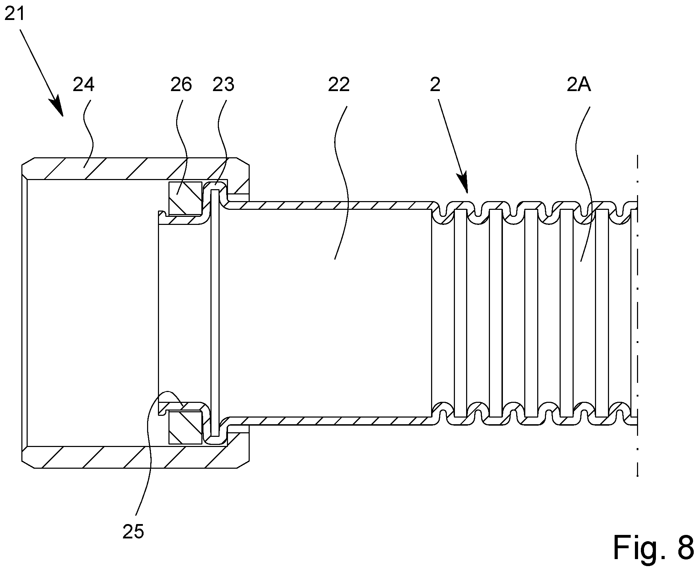

Der Schlauch 1 weist vorzugsweise lediglich einen Schlauchabschnitt 2 auf. Das andere, nicht in den Fig. 1 und 2 dargestellte Schlauchende 21 des Schlauchs 1 kann vorzugsweise gleich ausgebildet sein. An dem anderen Schlauchende 21 kann ein gleiches Anschlussstück 4 oder ein Anschlussstück 22 mit einer anderen Anschlussgeometrie angebracht sein. Eine besonders bevorzugte Ausführungsform des anderen Schlauchendes 21 ist in Fig. 7, 8 dargestellt.

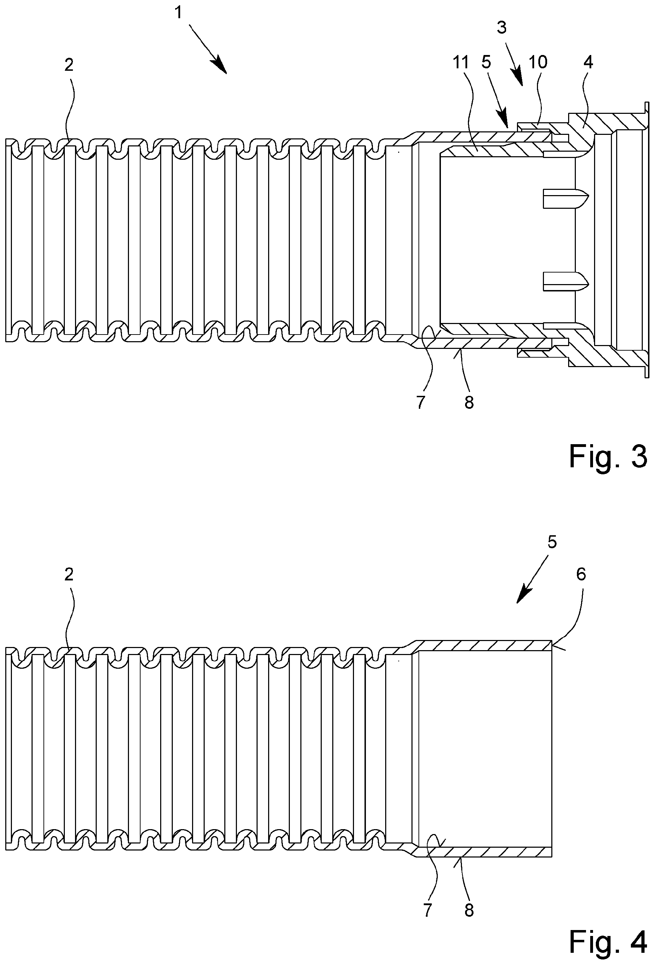

Erfindungsgemäß sind der Schlauchabschnitt 2 und das Anschlussstück 4 durch einen Schweißvorgang miteinander gefügt. Die Fig. 1 und 2 zeigen das Schlauchende 3 und das Anschlussstück 4 in einem miteinander verschweißten Zustand, während Fig. 3 den Schlauchabschnitt 2 und das Anschlussstück 4 in einem unverschweißten Zustand zeigt, bei dem der Schweißvorgang gestartet werden kann. Fig. 4 zeigt den Schlauchabschnitt 2 vor dem Verbinden mit dem Anschlussstück 4.

Wie insbesondere in den Fig. 3 und 4 dargestellt ist, weist der Schlauchabschnitt 2 an wenigstens einem Schlauchende 3 einen Fügebereich 5 auf. Der Fügebereich 5 wird durch ein in axialer Richtung rotationssymmetrisches rohrförmiges Endstück des Schlauchabschnitts 2 gebildet, wobei der Fügebereich 5 eine im Wesentlichen axiale Stirnfläche 6, eine im Wesentlichen radiale Innenfläche 7 und eine im Wesentlichen radiale Außenflächen 8 aufweist. Die radiale Innenfläche 7 ist nicht-gewellt ausgebildet und grenzt an eine gewellte Innenfläche des Schlauchabschnitts 2 an.

Der Schlauchabschnitt 2 ist vorzugsweise durch Extrusion hergestellt.

Besonders bevorzugt sind alle Teile des Schlauchabschnitts 2, insbesondere ein, vorzugsweise gewellter, Hauptabschnitt 2A und die davon unterschiedlichen Schlauchenden 3, 21 des Schlauchabschnitts 2 und/oder der Fügebereich 5 durch Extrusion in einem gemeinsamen, bevorzugt kontinuierlichen und/oder ununterbrochenen, Extrusionsprozess hergestellt. Hierdurch wird eine besonders einfache und kostengünstige Herstellung des Schlauchabschnitts 2 ermöglicht.

Insbesondere ist es so möglich, die Produktion des Schlauchabschnitts 2 im Rahmen eines kontinuierlichen Fertigungsprozesses umzusetzen, also insbesondere mehrere Schlauchabschnitte 2 hintereinander in einem Endlosprozess herzustellen. Dies ist insbesondere im Rahmen der Serienproduktion vorteilhaft.

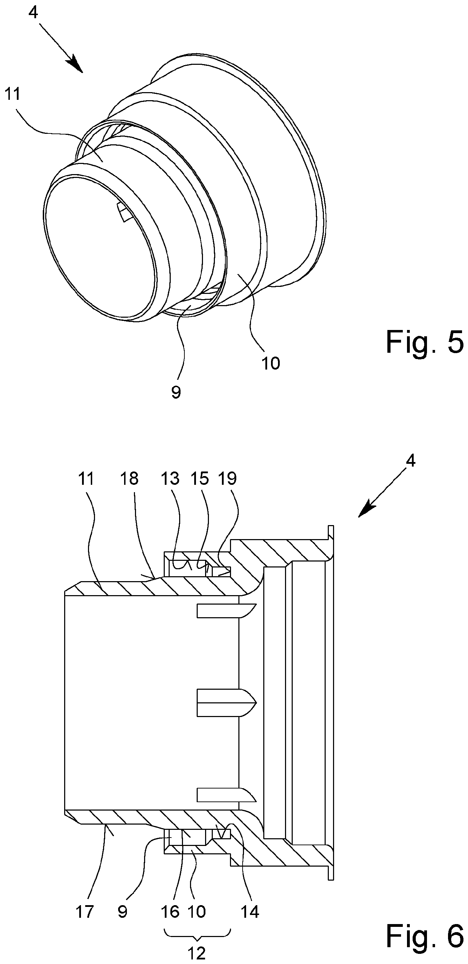

Das Anschlussstück 4 ist in den Fig. 5 und 6 dargestellt. Um eine feste Verbindung mit dem Schlauchabschnitt 2 zu erreichen, weist das Anschlussstück 4 eine rotationssymmetrische axiale Aufnahmenut 9 für ein Schlauchende 3 des Schlauchabschnitts 2 auf, wobei sich der Fügebereich 5 des Schlauchabschnitts 2 lediglich über eine Teillänge des rotationssymmetrischen rohrförmigen Endstücks des Schlauchabschnitts 2 erstreckt.

Die Aufnahmenut 9 wird zwischen einem zylindrischen kürzeren radial außenliegenden Wandabschnitt 10 und einem zylindrischen längeren und über den äußeren Wandabschnitt 10 in axialer Richtung überstehenden radial innenliegenden weiteren Wandabschnitt 11 gebildet. Die Aufnahmenut 9 definiert somit eine Fügezone 12, in der die Schweißverbindung zwischen dem Schlauchabschnitt 2 und dem Anschlussstück 4 ausgebildet wird. Die Wandabschnitte 10,11 sind vorzugsweise rotationssymmetrisch ausgebildet.

Der radial außenliegende Wandabschnitt 10 weist eine erste Innenfläche 13 und eine axial beabstandete zweite Innenfläche 14 auf, wobei die beiden Innenflächen 13,14 radial voneinander beabstandet sind bzw. unterschiedliche Abstände zur Rotationsachse des Anschlussstücks 4 aufweisen. Die Innenfläche 13 ist in axialer Richtung einer Öffnung der Aufnahmenut 9 zugewandt. Die Innenflächen 13, 14 sind über eine schräge Verbindungsfläche 15 miteinander verbunden. Alternativ könnte in diesem Bereich axial zwischen den Innenflächen 13, 14 auch eine Querschnittserweiterung in Form einer Stufe ausgebildet sein.

Der radial innenliegende Wandabschnitt 11 weist im Bereich der Aufnahmenut 9 eine Fügefläche 16 und angrenzend zum Schlauchabschnitt eine Einführfläche 17 auf, wobei die Fügefläche 16 und die Einführfläche 17 radial voneinander beabstandet und über eine Auflaufschräge 18 miteinander verbunden sind. Die Fügefläche 16 erstreckt sich dabei über die gesamten Länge der Fügezone 12. Die Einführfläche 17 erstreckt sich außerhalb der Aufnahmenut 9 in axialer Richtung.

Die Wandabschnitte 10,11 des Anschlussstücks 4 sind über eine radiale Nutgrundfläche 19 miteinander verbunden.

Zum dauerhaften Verbinden des Schlauchabschnitts 2 mit dem Anschlussstück 4 durch Fügen, insbesondere Schweißen, wird der Fügebereich 5 in die Aufnahmenut 9 eingeführt bzw. eingeschoben. Die Einführfläche 17, die in axialer Richtung an ihrem Ende in eine Fase übergeht, und die Auflaufschräge 18 vereinfachen dabei das Einschieben des Fügebereichs 5 am Schlauchende 3 des Schlauchabschnitts 2 in die Aufnahmenut 9 des Anschlussstücks 4. Der Fügebereich 5 wird dabei soweit in die Aufnahmenut 9 eingeschoben, bis das Schlauchende 3 axial gegen das Anschlussstück 4 anliegt.

Vorzugsweise werden der Schlauchabschnitt 2 und das Anschlussstück 4 mittels eines Rotationsreibschweißverfahrens miteinander gefügt. Dafür wird einer der beiden Fügepartner in Rotation versetzt, während der andere Fügepartner keine Rotationsbewegung durchführt und unter Druck gegen den ersten Fügepartner gepresst wird. Vorzugsweise rotiert der Schlauchabschnitt 2 beim Rotationsschweißen nicht, während das Anschlussstück 4 in Rotation versetzt wird. Durch die entstehende Reibung sich berührender Flächen des Schlauchabschnitts 2 und des Anschlussstücks 4 schmilzt das Kunststoffmaterial in diesen Bereichen auf. Vorzugsweise schmelzen im Verbindungsabschnitt 5 die Innenfläche 7 und die Außenfläche 8 wenigstens abschnittsweise und die Stirnfläche 6 vollständig auf.

Weiter vorzugsweise schmelzen die beiden Innenflächen 13,14 und die Verbindungsfläche 15 des radial außenliegenden Wandabschnitts 10 und die Außenfläche 16 des radial innenliegenden Wandabschnitts 11 sowie die radiale Nutgrundfläche 18 wenigstens abschnittsweise, vorzugsweise vollflächig, auf. Durch das Erweichen des Kunststoffmaterials und den Fügedruck, der zwischen dem Schlauchabschnitt 2 und dem Anschlussstück 4 erzeugt wird, wird der Fügebereich 5 während des Schweißprozesses tiefer in die Aufnahmenut 9 gedrückt. Aufgrund der verringerten Viskosität des Materials kann noch vorhandene Luft aus der Aufnahmenut 9 entweichen. Vorzugsweise füllt der Fügebereich 5 die Aufnahmenut 9 nach dem Schweißprozess vollständig aus.

Ist genügend Material aufgeschmolzen und/oder der Fügebereich 5 tief genug in die Aufnahmenut 9 gepresst worden, wird die Rotation des Anschlussstücks 4 gestoppt. Eine weitere Erwärmung des Materials wird unterbunden und gleichzeitig das Erstarren eingeleitet. Der Fügedruck wird beibehalten oder kann weiter erhöht werden, so dass das Material unter Druck stehend abkühlt und erhärtet. Ist das Material vollständig abgekühlt, kann der Fügedruck auf Normaldruck abgesenkt werden.

Vorzugsweise wird durch Rotationsschweißen eine Schweißverbindung 20 gebildet (schematisch in Fig. 2 gezeigt), die sich in axialer Richtung über die gesamte Nuttiefe und in Umfangsrichtung über den gesamten Umfang des Schlauchendes 3 erstreckt. Die Festigkeit der Schweißverbindung 20 wird dadurch erhöht. Vorzugsweise liegt die Festigkeit der Schweißverbindung 20 im Bereich der Materialfestigkeit. Der Schweißvorgang kann so ausgestaltet sein, was insbesondere den Fügedruck der Fügepartner, die Rotationsgeschwindigkeit und die Dauer des Schweißvorgangs betrifft, dass sich die Schweißverbindung 20 zwischen dem Schlauchende 3 und dem Anschlussstück 4 in radialer Richtung nicht bis zur inneren Oberfläche und/oder bis zur äußeren Oberfläche des Anschlussstücks 4 erstreckt. Im verschweißten Zustand bleibt damit die innere zylindrische Oberfläche und/oder die äußere zylindrische Oberfläche des Anschlussstücks unverformt erhalten.

Vorzugsweise besteht der Schlauchabschnitt 2 und das Anschlussstück 4 aus dem gleichen Kunststoffmaterial. Es ist jedoch auch möglich, dass der Schlauchabschnitt 2 und das Anschlussstück 4 aus unterschiedlichen Kunststoffmaterialien bestehen.

Fig. 1 bis 4 zeigen den Schlauch 1 nur im Bereich eines ersten Schlauchendes 3. Wie bereits erläutert, weist der Schlauch 1 an dem gegenüberliegenden Ende 21 vorzugsweise ein weiteres Anschlussstück 22 auf. Das Schlauchende 21 kann zumindest im Wesentlichen wie das Schlauchende 3 ausgebildet sein, beispielsweise mit einem weiteren Fügebereich 5. Insbesondere kann das weitere Anschlussstück 22 mit dem Schlauchende 21 gefügt sein. Hier sind jedoch auch andere Lösungen möglich.

Fig. 7 und 8 zeigen eine zweite Ausführungsform des Schlauchs 1, bei dem die beiden Schlauchenden 3, 21 bzw. die beiden Anschlussstücke 4, 22 unterschiedlich ausgebildet sind. Die bisherigen Ausführungen gelten vorzugsweise entsprechend, auch wenn auf eine wiederholte Beschreibung verzichtet wird. Insbesondere sind das Schlauchende 3 und das Anschlussstück 4 bei der zweiten Ausführungsform wie zuvor beschrieben miteinander gefügt. Es wird daher primär auf die Ausbildung des anderen Schlauchendes 21 und des weiteren Anschlussstücks 22 eingegangen.

Fig. 7 zeigt den Schlauch 1 gemäß der zweiten Ausführungsform in einem Längsschnitt. Fig. 8 zeigt einen vergrößerten Ausschnitt des Schlauchs 1 gemäß Fig. 7 im Bereich des zweiten Schlauchendes 21 bzw. zweiten Anschlussstücks 22.

Vorzugsweise ist das (weitere) Anschlussstück 22 zum Anschluss des Schlauchs 1 an ein korrespondierendes Anschlussstück eines Abnehmers und/oder, besonders bevorzugt, einer Wasserversorgungsleitung ausgebildet.

Vorzugsweise ist das weitere Anschlussstück 22 vom Schlauchabschnitt 2 bzw. zweiten Schlauchende 21 gebildet oder geformt. Insbesondere ist das weitere Anschlussstück 22 einstückig mit dem Schlauchabschnitt 2 gebildet oder geformt und/oder schließt sich einstückig an den Hauptabschnitt 2A des Schlauchabschnitts 2 an. Besonders bevorzugt ist das weitere Anschlussstück 22 in einem gemeinsamen Extrusionsprozess mit dem Hauptabschnitt 2A bzw. Schlauchabschnitt 2 bzw. zweiten Schlauchende 21 gebildet bzw. geformt.

Beim Darstellungsbeispiel gemäß Fig. 7 und 8 weist das weitere Anschlussstück 22 vorzugsweise eine Schulter 23 auf. Die Schulter 23 ist insbesondere umfangsseitig am Schlauchabschnitt 2 bzw. zweiten Schlauchende 21 gebildet und/oder erstreckt sich in radialer Richtung bzw. quer zur Längserstreckung des Schlauchs 1 bzw. des Schlauchabschnitts 2 bzw. des zweiten Schlauchendes 21.

Beim Darstellungsbeispiel gemäß Fig. 7 und 8 bildet das weitere Anschlussstück 22 bzw. die Schulter 23 vorzugsweise ein Widerlager bzw. einen Anschlag für einen Überwurfring 24, insbesondere eine Überwurfmutter.

Der Überwurfring 24 ist vorzugsweise einstückig gebildet.

Der Überwurfring 24 weist vorzugsweise eine zentrale Öffnung auf, durch die der Schlauchabschnitt 2 geführt bzw. geschoben ist. Insbesondere umschließt der Überwurfring 24 den Schlauch 1 bzw. Schlauchabschnitt 2 umfangsseitig bzw. über den gesamten Umfang.

Über den Überwurfring 24 ist der Schlauch 1 vorzugsweise an ein korrespondierendes Anschlussstück eines Abnehmers und/oder, besonders bevorzugt, einer Wasserversorgungsleitung anschließbar. Vorzugsweise weist der Überwurfring 24 hierzu ein Innengewinde auf, insbesondere für ein korrespondierendes Außengewinde des korrespondierenden Anschlussstücks. Hier sind jedoch auch andere Lösungen möglich.

Beim Darstellungsbeispiel ist das weitere Anschlussstück 22 vorzugsweise nicht direkt zum Anschluss an einen Abnehmer bzw. eine Wasserversorgungsleitung ausgebildet. Der Schlauch 1 ist vorzugsweise mittelbar über das Anschlussstück 22 anschließbar, insbesondere durch Anschließen des Überwurfrings 24 an ein korrespondierendes Anschlussstück eines Abnehmers oder einer Wasserversorgung. Insbesondere bildet das Anschlussstück 22 ein Widerlager zum Verspannen des Überwurfrings 24.

Es sind auch Lösungen möglich, bei denen das zweite Schlauchende 21 bzw. das Anschlussstück 22 direkt mit einem korrespondierenden Anschlussstück verbindbar ist. Beispielsweise kann das Anschlussstück 22 als Außengewinde für ein entsprechendes Innengewinde des korrespondierenden Anschlussstücks ausgebildet sein. Auf den Überwurfring 24, insbesondere eine Überwurfmutter, kann in diesem Fall verzichtet werden.

Zur stirnseitigen Abdichtung weist das zweite Schlauchende 21 stirnseitig vorzugsweise einen radial umlaufenden Haltebereich und/oder Aufnahmebereich 25 zum Halten und/oder zur Aufnahme eines Dichtungselements 26, vorzugsweise eines Dichtrings, auf. Das Dichtungselement 26 ist vorzugsweise bis zum Anschlussstück 22 bzw. der hiervon gebildeten Schulter 23 auf den Aufnahmebereich aufschiebbar und/oder aufsteckbar. Zusätzlich oder alternativ kann auch eine radiale Abdichtung vorgesehen sein.

Vorzugsweise bildet das gefügte Anschlussstück 4 eine Schulter 27 bzw. ein Widerlager für den Überwurfring 24, wie beispielsweise in Fig. 7 dargestellt.

Die Schulter 27 ist insbesondere umfangsseitig am Anschlussstück 4 gebildet und/oder erstreckt sich in radialer Richtung bzw. quer zur Längserstreckung des Schlauchs 1 bzw. des Schlauchabschnitts 2 bzw. des Anschlussstücks 4.

Der Überwurfring 24 ist vorzugsweise unverlierbar bzw. unlösbar an dem Schlauch 1 bzw. dem Schlauchabschnitt 2 gehalten.

Besonders bevorzugt wird der Überwurfring 24 auf den Schlauchabschnitt 2 gezogen, bevor das Anschlussstück 4 am ersten Schlauchende 3 gefügt wird. Hierzu weist der Überwurfring 24 vorzugsweise eine Öffnung mit einem größeren Durchmesser als der Schlauchabschnitt 2 bzw. das erste Schlauchende 3 bzw. der Fügebereich 5 auf. Anschließend wird dann das Anschlussstück 4 am ersten Schlauchende 3 bzw. Fügebereich 5 durch Fügen dauerhaft befestigt.

Die vom Anschlussstück 4 gebildete Schulter 27 hat vorzugsweise einen größeren Durchmesser als die Öffnung des Überwurfrings 24, so dass der Überwurfring 24 nicht (mehr) vom ersten Schlauchende 3 gezogen bzw. über das erste Schlauchende 3 vom Schlauch 1 getrennt werden kann.

Beim Darstellungsbeispiel ist das (gefügte) Anschlussstück 4 vorzugsweise direkt an ein korrespondierendes Anschlussstück anschließbar. Beispielsweise kann das Anschlussstück 4 ein Innengewinde aufweisen, so dass der Schlauch 1 an ein korrespondierendes Außengewinde eines korrespondierenden Anschlussstücks geschraubt werden kann. Hier sind jedoch auch andere Lösungen möglich, beispielsweise ein Anschlussstück 4 mit Außengewinde oder anderen Befestigungsmitteln, wie einem Bajonettverschluss.

Alternativ kann in einer nicht dargestellten Variante ein Anschluss des ersten Schlauchendes 3 durch einen (weiteren) Überwurfring, insbesondere eine (weitere) Überwurfmutter, realisiert sein.

Insbesondere bildet die Schulter 27 des Anschlussstücks 4 dann einen Anschlag bzw. ein Widerlager für den (weiteren) Überwurfring.

Über den (weiteren) Überwurfring ist der Schlauch 1 vorzugsweise an ein korrespondierendes Anschlussstück einer Wasserversorgung und/oder, besonders bevorzugt, eines Abnehmers anschließbar.

Vorzugsweise weist der Schlauch 1 in dieser Variante zwei Überwurfringe 24 auf, wobei ein Überwurfring 24 dem weiteren Anschlussstück 22 am Schlauchende 21 zugeordnet ist und ein anderer Überwurfring 24 dem (gefügten) Anschlussstück 4 am Schlauchende 3 zugeordnet ist. Insbesondere bilden die Anschlussstücke 4, 22 jeweils eine Schulter 23, 27 für den jeweiligen Überwurfring 24, insbesondere als Widerlager zum Verspannen. In diesem Fall sind vorzugsweise beide Anschlussstücke 4, 22 mittelbar über den jeweiligen Überwurfring 24 an einen Abnehmer bzw. eine Wasserversorgungsleitung anschließbar.

In einem bevorzugten Herstellungsverfahren des Schlauchs 1 gemäß zweiter Ausführungsform wird zunächst der Schlauchabschnitt 2 hergestellt, besonders bevorzugt mit dem Anschlussstück 22 und/oder dem Fügebereich 5, vorzugsweise durch Extrusion. Insbesondere wird der Schlauchabschnitt 2 zusammen mit dem Anschlussstück 22 und/oder dem Fügebereich 5 extrudiert.

Falls kein Anschlussstück 22 durch Extrusion vorgesehen ist, wird in einem optionalen weiteren Schritt ein entsprechendes Anschlussstück 22 durch Fügen dauerhaft mit dem Schlauchende 21 verbunden.

In einem weiteren Schritt wird der Schlauchabschnitt 2 mit dem Schlauchende 3 bzw. dem Fügebereich 5 durch einen oder zwei Überwurfring(e) 24, insbesondere die zentrale(n) Öffnung(en) des/der Überwurfring(e) 24, geführt bzw. werden der/die Überwurfring(e) 24 über das Schlauchende 3 bzw. den Fügebereich 5 auf den Schlauchabschnitt 2 geschoben bzw. gesteckt. Der bzw. die Überwurfring(e) 24 ist/sind durch das (gefügte oder extrudierte) Anschlussstück 22 bereits gegen ein Entfernen am Schlauchende 21 gesichert.

In einem weiteren Schritt wird das Anschlussstück 4 durch Fügen mit dem Schlauchende 3 bzw. Fügebereich 5 dauerhaft verbunden, insbesondere wie eingangs beschrieben. Hierdurch wird ein Entfernen des bzw. der Überwurfring(e) 24 am Schlauchende 3 verhindert.

Einzelne Verfahrensschritte können auch weggelassen werden oder in einer anderen Reihenfolge durchgeführt werden.

Der Schlauch 1 bzw. der Schlauchabschnitt 2 bzw. das/die Anschlussstück(e) 4, 22 bzw. der/die Überwurfring(e) 24 ist/sind vorzugsweise für die Trinkwasserinstallation ausgebildet bzw. dafür geeignet, Trinkwasser zu führen oder mit Trinkwasser in Kontakt zu kommen. Insbesondere erfüllt der Schlauch 1, insbesondere alle Komponenten des Schlauchs 1, wie der Schlauchabschnitt 2 und das Anschlussstück 4 bzw. die Anschlussstücke 4, 22, die eingangs genannten Leitlinien und Prüfnormen.

Zu den Komponenten des Schlauchs 1 können neben dem Schlauchabschnitt 2 und dem/den Anschlussstück(en) 4, 22 auch weitere Elemente bzw. Werkstoffe, beispielsweise der/die Überwurfring(e) 24, Dichtelemente, Klebstoffe oder dergleichen gehören.

"Trinkwasser-Installation" im Sinne der vorliegenden Erfindung ist vorzugsweise die Gesamtheit der Rohrleitungen, Armaturen und Apparate, die sich zwischen dem Punkt des Übergangs von Trinkwasser aus einer Wasserversorgungsanlage, beispielsweise Wasserwerken, an den Nutzer und dem Punkt der Entnahme von Trinkwasser befinden.

Unter "Trinkwasser" ist vorzugsweise Wasser für den menschlichen Gebrauch, insbesondere für den Verzehr, zu verstehen.

Die deutsche "Verordnung über die Qualität von Wasser für den menschlichen Gebrauch" (Trinkwasserverordnung) enthält Begriffsbestimmungen sowie Schutzvorschriften für Trinkwasser. Diese stellt eine Umsetzung der EG-Richtlinie 98/83/EG "Über die Qualität von Wasser für den menschlichen Gebrauch" in nationales Recht dar. "Trinkwasser" im Sinne der vorliegenden Erfindung ist vorzugsweise wie in der EG-Richtlinie bzw. deren nationalen Umsetzungen, insbesondere wie in der deutschen Trinkwasserverordnung, definiert.

Trinkwasser ist alles Wasser, das, im ursprünglichen Zustand oder nach Aufbereitung, bestimmt ist zum Trinken, zum Kochen, zur Zubereitung von Speisen und Getränken, zur Körperpflege und -reinigung, zur Reinigung von Gegenständen, die bestimmungsgemäß mit Lebensmitteln in Berührung kommen oder zur Reinigung von Gegenständen, die bestimmungsgemäß nicht nur vorübergehend mit dem menschlichen Körper in Kontakt kommen. Ferner ist Trinkwasser alles Wasser, das in einem Lebensmittelbetrieb verwendet wird für die Herstellung, die Behandlung, die Konservierung oder das Inverkehrbringen von Erzeugnissen oder Substanzen, die für den menschlichen Gebrauch bestimmt sind.

Das Trinkwasser muss so beschaffen sein, dass durch seinen Genuss oder Gebrauch eine Schädigung der menschlichen Gesundheit, insbesondere durch Krankheitserreger, nicht zu besorgen ist. Ferner muss es rein und genusstauglich sein. Insbesondere dürfen in Trinkwasser Krankheitserreger und chemische Stoffe nicht in Konzentrationen enthalten sein, die eine Schädigung der menschlichen Gesundheit besorgen lassen. Konzentrationen von Mikroorganismen und chemischen Stoffen, die das Trinkwasser verunreinigen oder seine Beschaffenheit nachteilig beeinflussen können, sollen so niedrig gehalten werden, wie dies nach den allgemeinen anerkannten Regeln der Technik mit vertretbarem Aufwand unter Berücksichtigung von Einzelfällen möglich ist. Ferner darf Trinkwasser keine Stoffe aufweisen, die ein oder mehrere Radionuklide enthalten, deren Aktivität oder Konzentration unter dem Gesichtspunkt des Strahlenschutzes nicht außer Acht gelassen werden kann.

Insbesondere überschreiten die Mikroorganismen, chemischen Stoffe und radioaktiven Stoffe nicht die in den Anlagen 1-3 der deutschen Trinkwasserverordnung festgelegten Grenzwerte.

Der Schlauch 1 erfüllt vorzugsweise die "Anforderungen an Anlagen für die Gewinnung, Aufbereitung oder Verteilung von Trinkwasser" gemäß 9 17 der deutschen Trinkwasserverordnung. Insbesondere darf der Schlauch 1 nicht den nach der Trinkwasserverordnung vorgesehenen Schutz der menschlichen Gesundheit unmittelbar oder mittelbar mindern, den Geruch oder den Geschmack des Wassers nachträglich verändern oder Stoffe in Mengen ins Trinkwasser abgeben, die größer sind als dies bei Einhaltung der allgemein anerkannten Regeln der Technik unvermeidbar ist.

Die Komponenten des Schlauchs 1, insbesondere der Schlauchabschnitt 2 und das Anschlussstück 4 bzw. die Anschlussstücke 4, 22, sind vorzugsweise untereinander und mit dem durchzuleitenden Wasser chemisch kompatibel. Die Komponenten des Schlauchs 1 gehen also vorzugsweise keine chemischen Reaktionen miteinander oder mit Wasser ein. Insbesondere findet keine Korrosion statt und/oder sind die Komponenten des Schlauchs 1 chemisch beständig, behalten insbesondere ihre charakteristischen Eigenschaften trotz beliebig langen Kontakts mit anderen Komponenten des Schlauchs 1 und/oder mit Wasser.

Die mit Wasser für den menschlichen Gebrauch in Kontakt kommenden Komponenten bzw. Werkstoffe des Schlauchs 1, besonders bevorzugt alle Werkstoffe bzw. Komponenten des Schlauchs 1, stellen kein Gesundheitsrisiko dar und rufen vorzugsweise keinerlei Veränderungen des Trinkwassers hinsichtlich seiner Beschaffenheit oder seines Aussehens, Geruchs oder Geschmacks hervor.

Die Prüfung des Schlauchs 1 im Hinblick darauf, dass er für die Trinkwasserinstallation geeignet ist, insbesondere dass er den Anforderungen gemäß der Trinkwasserverordnung entspricht, erfolgt vorzugsweise nach den Vorgaben gemäß "DVGW KTW" bzw. "DVGW W 270", besonders bevorzugt nach der "Leitlinie zur hygienischen Beurteilung von organischen Materialien im Kontakt mit Trinkwasser" (KTW-Leitlinie) des deutschen Umweltbundesamtes oder nach der "Bewertungsgrundlage für Kunststoffe und andere organische Materialien im Kontakt mit Trinkwasser" (KTW-BWGL) des deutschen Umweltbundesamtes. Hiernach wird der Schlauch 1 insbesondere auf Migration von Stoffen und Förderung von mikrobiellem Wachstum geprüft.

Die Prüfung des Schlauchs 1 erfolgt vorzugsweise am fertigen Endprodukt, kann jedoch zusätzlich oder alternativ auch separat für den Schlauchabschnitt 2 und das Anschlussstück 4 erfolgen.

Die Prüfung des Schlauchs 1 auf Migration von Stoffen erfolgt vorzugsweise durch Befüllen des Schlauchs 1 mit (entchlortem) Trinkwasser. Die Prüfung der Schlauchenden bzw. des Anschlussstücks 4 bzw. der Anschlussstücke 4, 22 erfolgt vorzugsweise zusätzlich durch Eintauchen in (entchlortes) Trinkwasser. Die dabei entstehenden Wässer werden im Folgenden Migrationswässer genannt.

Die Prüfung erfolgt vorzugsweise sowohl mit Kaltwasser als auch mit Warmwasser und Heißwasser. Kaltwasser ist hierbei vorzugsweise Wasser mit einer Temperatur zwischen 21 °C und 25 °C, insbesondere von 23 °C. Warmwasser ist hierbei vorzugsweise Wasser mit einer Temperatur zwischen 58 °C und 62 °C, insbesondere von 60 °C. Heißwasser ist hierbei vorzugsweise Wasser mit einer Temperatur zwischen 83 °C und 87 °C, insbesondere von 85 °C.

Die Migrationswässer werden vorzugsweise für 10 Tage, besonders bevorzugt für 31 Tage, mit dem Schlauch 1 in Kontakt gebracht.

Die Migrationswässer werden auf Migration von Stoffen, insbesondere auf die Parameter Geruch, Trübung, Färbung, Schaumbildung und gesamtorganischer Kohlenstoff (Total Organic Carbon, TOC) untersucht. Die Prüfung erfolgt hierbei vorzugsweise gemäß DIN EN 1420 und/oder DIN EN 12873.

Vorzugsweise werden die in der KTW-Leitlinie bzw. der KTW-Bewertungsgrundlage oder anderen geeigneten Leitlinien bzw. Bewertungsgrundlagen festgelegten Grenzwerte von den Migrationswässern nach 10-tägigem Kontakt, insbesondere nach 31-tägigem Kontakt, mit dem Schlauch 1 nicht überschritten.

Besonders bevorzugt lässt sich über den Messzeitraum keine steigende Tendenz der Parameter feststellen.

Die Prüfung hinsichtlich der Förderung des mikrobiellen Wachstums erfolgt vorzugsweise nach DIN EN 16421, insbesondere dem darin beschriebenen Biomasseproduktionspotential-Verfahren (BPP-Verfahren) oder dem volumetrischen Verfahren.

Vorzugsweise weist der Schlauch 1 in allen untersuchten Prüfperioden nur eine festanhaftende Oberflächenbesiedlung oder einen Oberflächenbewuchs auf, die bzw. der geringer als oder gleich 0,07 ml / 800 cm² ist, insbesondere geringer als oder gleich 0,05 ml / 800 cm² ist.

Vorzugsweise weist der Schlauch 1 jedoch einen Oberflächenbewuchs bzw. eine Oberflächenbesiedlung größer 0 auf, hat also keine biozide Wirkung auf das Trinkwasser.

### Bezugszeichenliste:

- 1: Schlauch
- 2: Schlauchabschnitt
- 2A: Hauptabschnitt
- 3: Schlauchende
- 4: Anschlussstück
- 5: Fügebereich
- 6: Stirnfläche
- 7: Innenfläche
- 8: Außenfläche
- 9: Aufnahmenut
- 10: Wandabschnitt
- 11: Wandabschnitt
- 12: Fügezone
- 13: Innenfläche
- 14: Innenfläche
- 15: Verbindungsfläche
- 16: Fügefläche
- 17: Einführfläche
- 18: Auflaufschräge
- 19: Nutgrundfläche
- 20: Schweißverbindung
- 21: Schlauchende
- 22: Anschlussstück
- 23: Schulter
- 24: Überwurfring
- 25: Aufnahmebereich
- 26: Dichtelement
- 27: Schulter

## Patentansprüche

1. Verfahren zur Herstellung eines Schlauchs (1), ausgebildet zur Wasserleitung, insbesondere zur Trinkwasserleitung, in einem wasserführenden System und ausgebildet zum Anschluss einer Sanitärarmatur, einer Geschirrspül- und/oder einer Waschmaschine an eine Wasserversorgungsleitung, insbesondere an ein Eckventil, wobei ein, vorzugsweise gewellter, Schlauchabschnitt (2) aus Kunststoff hergestellt wird,
wobei der Schlauchabschnitt (2) an wenigstens einem Ende (3) mit einem abweichend zum Schlauchabschnitt (2) ausgebildeten Anschlussstück (4) aus Kunststoff durch Fügen, vorzugsweise durch Reibschweißen, dauerhaft verbunden wird, wobei das Anschlussstück (4) zur Verbindung des Schlauchs (1) mit einem komplementär ausgebildeten Anschlussstück einer Sanitärarmatur oder einer Geschirrspül- und/oder Waschmaschine oder einer Wasserversorgungsleitung ausgebildet ist,
wobei die maximale Druckbeständigkeit des Schlauchabschnitts (2) und des Anschlussstücks (4) wenigstens 40 bar beträgt und der Schlauchabschnitt (2) in einem Extrusionsverfahren hergestellt wird und an dem wenigstens einen Ende (3) einen Fügebereich (5) mit einer vom übrigen Schlauchabschnitt (2) abweichenden Innen- und/oder Außengeometrie aufweist, wobei das Anschlussstück (4) im Fügebereich (5) mit dem Schlauchabschnitt (2) durch Fügen dauerhaft verbunden wird, und/oder
die maximale Druckbeständigkeit des Schlauchabschnitts (2) und des Anschlussstücks (4) wenigstens 40 bar beträgt und an einem anderen Ende (21) des Schlauchabschnitts (2) ein weiteres Anschlussstück (22) gebildet wird, wobei der Schlauchabschnitt (2) und das weitere Anschlussstück (22) einstückig durch Extrusion in einem gemeinsamen Extrusionsprozess hergestellt werden.

2. Verfahren nach Anspruch 1, **dadurch gekennzeichnet, dass** der Schlauchabschnitt (2) und/oder das Anschlussstück (4) aus einem Kunststoff, der aromatische Strukturen enthält, und/oder einem Material aus der Familie der Polysulfone, insbesondere Polyphenylsulfon, hergestellt wird.

3. Verfahren nach Anspruch 1 oder 2, **dadurch gekennzeichnet, dass** der Schlauchabschnitt (2) durch einen Überwurfring (24) zum Anschluss des Schlauchs (1), insbesondere eine Überwurfmutter, geführt wird und anschließend das Anschlussstück (4) an den Schlauchabschnitt (2) gefügt wird, wodurch ein Entfernen des Überwurfrings (24) vom Schlauchabschnitt (2) verhindert wird.

4. Verfahren nach Anspruch 3, **dadurch gekennzeichnet, dass** der Schlauchabschnitt (2) durch zwei Überwurfringe (24) geführt wird, bevor das Anschlussstück (4) an den Schlauchabschnitt (2) gefügt wird.

5. Verfahren nach Anspruch 3 oder 4, **dadurch gekennzeichnet, dass** das weitere Anschlussstück (22) mit einer Schulter (23) extrudiert wird, die einen Anschlag für den oder einen weiteren Überwurfring (24) bildet und hierdurch ein Entfernen des Überwurfrings (24) bzw. der Überwurfringe (24) verhindert.

6. Verfahren nach einem der Ansprüche 3 bis 5, **dadurch gekennzeichnet, dass** an gegenüberliegenden Enden (3, 21) des Schlauchs (1) jeweils ein Anschlussstück (4, 22) vorgesehen wird, wobei die Anschlussstücke (4, 22) jeweils eine Schulter (23, 27) aufweisen, die Anschläge für den Überwurfring (24) bzw. die Überwurfringe (24) bilden und hierdurch ein Entfernen des Überwurfrings (24) bzw. der Überwurfringe (24) verhindern.

7. Verfahren nach einem der voranstehenden Ansprüche, **dadurch gekennzeichnet, dass** das Anschlussstück (4) in einem Spritzgussverfahren und/oder aus dem gleichen Kunststoffmaterial wie der Schlauchabschnitt (2) hergestellt wird.

8. Schlauch (1), ausgebildet zur Wasserleitung, insbesondere zur Trinkwasserleitung, in einem wasserführenden System und ausgebildet zum Anschließen wenigstens einer Sanitärarmatur, einer Geschirrspül- und/oder einer Waschmaschine an eine Wasserversorgungsleitung, insbesondere an ein Eckventil, mit einem, vorzugsweise gewellten, Schlauchabschnitt (2) aus Kunststoff,
wobei wenigstens ein abweichend zum Schlauchabschnitt (2) ausgebildetes Anschlussstück (4) aus Kunststoff zur Verbindung des Schlauchs (1) mit einem komplementär ausgebildeten Anschlussstück einer Sanitärarmatur und/oder einer Geschirrspül- und/oder Waschmaschine oder einer Wasserversorgungsleitung vorgesehen ist, und
wobei ein Ende (3) des Schlauchabschnitts (2) und das Anschlussstück (4) durch Fügen, vorzugsweise durch Reibschweißen, dauerhaft verbunden sind,
wobei die maximale Druckbeständigkeit des Schlauchabschnitts (2) und des Anschlussstücks (4) wenigstens 40 bar beträgt und der Schlauchabschnitt (2) in einem Extrusionsverfahren hergestellt ist und an dem Ende (3) einen Fügebereich (5) mit einer vom übrigen Schlauchabschnitt (2) abweichenden Innen- und/oder Außengeometrie aufweist, wobei das Anschlussstück (4) im Fügebereich (5) mit dem Schlauchabschnitt (2) durch Fügen dauerhaft verbunden ist, und/oder
die maximale Druckbeständigkeit des Schlauchabschnitts (2) und des Anschlussstücks (4) wenigstens 40 bar beträgt und an einem anderen Ende (21) des Schlauchabschnitts (2) ein weiteres Anschlussstück (22) gebildet ist, wobei der Schlauchabschnitt (2) und das weitere Anschlussstück (22) einstückig durch Extrusion in einem gemeinsamen Extrusionsprozess hergestellt sind.

9. Schlauch (1) nach Anspruch 8, **dadurch gekennzeichnet, dass** der Schlauchabschnitt (2) und/oder das Anschlussstück (4) aus einem Kunststoff, der aromatische Strukturen enthält, und/oder einem Material aus der Familie der Polysulfone, insbesondere Polyphenylsulfon, hergestellt sind/ist.

10. Schlauch (1) nach Anspruch 8 oder 9, **dadurch gekennzeichnet, dass** der Schlauch (1) einen Überwurfring (24) zum Anschluss des Schlauchs (1), insbesondere eine Überwurfmutter, aufweist, der unverlierbar an dem Schlauchabschnitt (2) gehalten ist, wobei das Anschlussstück (4) oder eine hiervon gebildete Schulter (27) ein Entfernen des Überwurfrings (24) vom Schlauchabschnitt (2) verhindert, vorzugsweise wobei der Schlauch (1) zwei Überwurfringe (24) aufweist.

11. Schlauch (1) nach Anspruch 10, **dadurch gekennzeichnet, dass** das weitere Anschlussstück (22) eine Schulter (23) aufweist, die einen Anschlag für den oder einen weiteren Überwurfring (24) bildet und hierdurch ein Entfernen des Überwurfrings (24) bzw. der Überwurfringe (24) verhindert.

12. Schlauch (1) nach Anspruch 10 oder 11, **dadurch gekennzeichnet, dass** an gegenüberliegenden Enden (3, 21) des Schlauchs (1) jeweils ein Anschlussstück (4, 22) vorgesehen ist, wobei die Anschlussstücke (4, 22) jeweils eine Schulter (23, 27) aufweisen, die Anschläge für den Überwurfring (24) bzw. die Überwurfringe (24) bilden und hierdurch ein Entfernen des Überwurfrings (24) bzw. der Überwurfringe (24) verhindern.

13. Schlauch (1) nach einem der Ansprüche 8 bis 12, **dadurch gekennzeichnet, dass** das Anschlussstück (4) durch ein Spritzgießverfahren und/oder aus dem gleichen Kunststoffmaterial wie der Schlauchabschnitt (2) hergestellt ist.

14. Schlauch (1) nach einem der Ansprüche 8 bis 13, **dadurch gekennzeichnet, dass** der Schlauchabschnitt (2) und das Anschlussstück (4) für die Trinkwasserinstallation ausgebildet sind.

15. Verwendung eines Schlauchs (1) nach einem der Ansprüche 8 bis 14, in einem wasserführenden System zur Wasserleitung, insbesondere zur Trinkwasserleitung, und zum Anschluss einer Sanitärarmatur, einer Geschirrspül- und/oder einer Waschmaschine an eine Wasserversorgungsleitung, insbesondere an ein Eckventil, wobei das Anschlussstück (4) mit einem komplementär ausgebildeten Anschlussstück einer Sanitärarmatur oder einer Geschirrspül- und/oder Waschmaschine oder einer Wasserversorgungsleitung, wie einem Eckventil, verbunden wird.

## Claims

1. Method for producing a hose (1), configured for water conduction, in particular for drinking water conduction, in a water-carrying system and configured for connecting a sanitary tap, a dishwasher and/or a washing machine to a water supply line, in particular to an angle valve,
wherein a, preferably corrugated, hose portion (2) is produced from plastic, wherein the hose portion (2) is permanently connected at at least one end (3) to a connecting piece (4) made of plastic and formed differently from the hose portion (2) by joining, preferably by friction welding, wherein the connecting piece (4) is configured for connecting the hose (1) to a complementarily formed connecting piece of a sanitary tap or of a dishwasher and/or washing machine or of a water supply line,
wherein
the maximum pressure resistance of the hose portion (2) and of the connecting piece (4) is at least 40 bar and the hose portion (2) is produced in an extrusion process and has, at the at least one end (3), a joining region (5) with an inner and/or outer geometry which differs from the rest of the hose portion (2), the connecting piece (4) being permanently connected to the hose portion (2) in the joining region (5) by joining, and/or
the maximum pressure resistance of the hose portion (2) and the connecting piece (4) is at least 40 bar, and a further connecting piece (22) is formed at another end (21) of the hose portion (2), the hose portion (2) and the further connecting piece (22) being produced in one piece by extrusion in a common extrusion process.

2. Method according to claim 1, **characterized in that** the hose portion (2) and/or the connecting piece (4) is produced from a plastic containing aromatic structures and/or a material from the polysulphone family, in particular polyphenylsulphone.

3. Method according to claim 1 or 2, **characterized in that** the hose portion (2) is passed through a union ring (24) for connecting the hose (1), in particular a union nut, and subsequently the connecting piece (4) is joined to the hose portion (2), thereby preventing removal of the union ring (24) from the hose portion (2).

4. Method according to claim 3, **characterized in that** the hose portion (2) is passed through two union rings (24) before the connecting piece (4) is joined to the hose portion (2).

5. Method according to claim 3 or 4, **characterized in that** the further connecting piece (22) is extruded with a shoulder (23) which forms a stop for the or a further union ring (24) and thereby prevents removal of the union ring or union rings (24).

6. Method according to one of claims 3 to 5, **characterized in that** opposite ends (3, 21) of the hose (1) are each provided with a respective connecting piece (4, 22), the connecting pieces (4, 22) each having a shoulder (23, 27) which form stops for the union ring (24) or union rings (24) and thereby prevent removal of the union ring (24) or union rings (24).

7. Method according to one of the preceding claims, **characterized in that** the connecting piece (4) is produced in an injection molding process and/or from the same plastic material as the hose portion (2).

8. Hose (1), configured for water conduction, in particular for drinking water conduction, in a water-carrying system and configured for connecting at least one sanitary tap, a dishwasher and/or a washing machine to a water supply line, in particular to an angle valve, with a, preferably corrugated, hose portion (2) made of plastic, wherein at least one connecting piece (4) made of plastic and formed differently from the hose portion (2) is provided for connecting the hose (1) to a complementarily formed connecting piece of a sanitary tap and/or of a dishwasher and/or washing machine or of a water supply line, and
wherein an end (3) of the hose portion (2) and the connecting piece (4) are permanently connected by joining, preferably by friction welding,
wherein
the maximum pressure resistance of the hose portion (2) and of the connecting piece (4) is at least 40 bar and the hose portion (2) is produced in an extrusion process and has at the end (3) a joining region (5) with an inner and/or outer geometry which differs from the rest of the hose portion (2), the connecting piece (4) being permanently connected to the hose portion (2) in the joining region (5) by joining, and/or
the maximum pressure resistance of the hose portion (2) and the connecting piece (4) is at least 40 bar, and a further connecting piece (22) is formed at another end (21) of the hose portion (2), the hose portion (2) and the further connecting piece (22) being produced in one piece by extrusion in a common extrusion process.

9. Hose (1) according to claim 8, **characterized in that** the hose portion (2) and/or the connecting piece (4) are/is made of a plastic containing aromatic structures and/or a material from the polysulphone family, in particular polyphenylsulphone.

10. Hose (1) according to claim 8 or 9, **characterized in that** the hose (1) has a union ring (24) for connecting the hose (1), in particular a union nut, which is held captive on the hose portion (2), wherein the connecting piece (4) or a shoulder (27) formed thereby prevents removal of the union ring (24) from the hose portion (2), preferably wherein the hose (1) has two union rings (24).

11. Hose (1) according to claim 10, **characterized in that** the further connecting piece (22) has a shoulder (23) which forms a stop for the or a further union ring (24) and thereby prevents removal of the union ring or union rings (24).

12. Hose (1) according to claim 10 or 11, **characterized in that** opposite ends (3, 21) of the hose (1) are each provided with a respective connecting piece (4, 22), the connecting pieces (4, 22) each having a shoulder (23, 27) which form stops for the union ring (24) or union rings (24) and thereby prevent removal of the union ring (24) or union rings (24).

13. Hose (1) according to one of claims 8 to 12, **characterized in that** the connecting piece (4) is produced by an injection molding process and/or from the same plastic material as the hose portion (2).

14. Hose (1) according to one of claims 8 to 13, **characterized in that** the hose portion (2) and the connecting piece (4) are configured for the drinking water installation.

15. Use of a hose (1) according to one of claims 8 to 14, in a water-carrying system for water conduction, in particular for drinking water conduction, and for connecting a sanitary tap, a dishwasher and/or a washing machine to a water supply line, in particular to an angle valve, wherein the connecting piece (4) is connected to a complementarily designed connecting piece of a sanitary tap or of a dishwasher and/or washing machine or of a water supply line, such as an angle valve.

## Revendications

1. Procédé de fabrication d'un tuyau flexible (1), réalisé pour l'acheminement d'eau, en particulier pour l'acheminement d'eau potable, dans un système de guidage d'eau et réalisé pour le raccordement d'un robinet sanitaire, d'un lave-vaisselle et/ou d'un lave-linge à un conduit d'alimentation en eau, en particulier à une vanne d'équerre,
dans lequel un tronçon de tuyau flexible (2) de préférence ondulé est fabriqué à partir de matière plastique,
dans lequel le tronçon de tuyau flexible (2) est relié durablement par assemblage, de préférence par soudage par friction, à une pièce de raccordement (4) en matière plastique réalisée de manière différente par rapport au tronçon de tuyau flexible (2) sur au moins une extrémité (3), dans lequel la pièce de raccordement (4) est réalisée pour relier le tuyau flexible (1) à une pièce de raccordement réalisée de manière complémentaire d'un robinet sanitaire ou d'un lave-vaisselle et/ou lave-linge ou d'un conduit d'alimentation en eau,
dans lequel
la résistance maximale à la pression du tronçon de tuyau flexible (2) et de la pièce de raccordement (4) est d'au moins 40 bar et le tronçon de tuyau flexible (2) est fabriqué dans un procédé d'extrusion et présente, sur l'au moins une extrémité (3), une zone d'assemblage (5) avec une géométrie intérieure et/ou extérieure différente du tronçon de tuyau flexible (2) restant, dans lequel la pièce de raccordement (4) est reliée durablement par assemblage au tronçon de tuyau flexible (2) dans la zone d'assemblage (5), et/ou
la résistance maximale à la pression du tronçon de tuyau flexible (2) et de la pièce de raccordement (4) est d'au moins 40 bar et une autre pièce de raccordement (22) est formée sur une autre extrémité (21) du tronçon de tuyau flexible (2), dans lequel le tronçon de tuyau flexible (2) et l'autre pièce de raccordement (22) sont fabriqués d'un seul tenant par extrusion dans un processus d'extrusion commun.

2. Procédé selon la revendication 1, **caractérisé en ce que** le tronçon de tuyau flexible (2) et/ou la pièce de raccordement (4) sont fabriqués à partir d'une matière plastique, qui contient des structures aromatiques, et/ou d'un matériau issu de la famille des polysulfones, en particulier du polyphénylsulfone.

3. Procédé selon la revendication 1 ou 2, **caractérisé en ce que** le tronçon de tuyau flexible (2) est guidé par une bague à chapeau (24) destinée à raccorder le tuyau flexible (1), en particulier un écrou d'accouplement, puis la pièce de raccordement (4) est assemblée sur le tronçon de tuyau flexible (2), ce qui permet d'empêcher un retrait de la bague à chapeau (24) du tronçon de tuyau flexible (2).

4. Procédé selon la revendication 3, **caractérisé en ce que** le tronçon de tuyau flexible (2) est guidé par deux bagues à chapeau (24) avant que la pièce de raccordement (4) ne soit guidée sur le tronçon de tuyau flexible (2).

5. Procédé selon la revendication 3 ou 4, **caractérisé en ce que** l'autre pièce de raccordement (22) est extrudée avec un épaulement (23), qui forme une butée pour la ou une autre bague à chapeau (24) et empêche ainsi un retrait de la bague à chapeau (24) ou des bagues à chapeau (24).

6. Procédé selon l'une quelconque des revendications 3 à 5, **caractérisé en ce que** respectivement une pièce de raccordement (4, 22) est prévue sur des extrémités (3, 21) se faisant face du tuyau flexible (1), dans lequel les pièces de raccordement (4, 22) présentent respectivement un épaulement (23, 27), qui forment des butées pour la bague à chapeau (24) ou les bagues à chapeau (24) et empêchent ainsi un retrait de la bague à chapeau (24) ou des bagues à chapeau (24).

7. Procédé selon l'une quelconque des revendications précédentes, **caractérisé en ce que** la pièce de raccordement (4) est fabriquée dans un procédé de coulée par injection et/ou à partir du même matériau en matière plastique que le tronçon de tuyau flexible (2).

8. Tuyau flexible (1) réalisé pour l'acheminement d'eau, en particulier pour l'acheminement d'eau potable, dans un système de guidage d'eau et réalisé pour raccorder au moins un robinet sanitaire, un lave-vaisselle et/ou un lave-linge à un conduit d'alimentation en eau, en particulier à une vanne d'équerre, avec un tronçon de tuyau flexible (2) en matière plastique, de préférence ondulé,
dans lequel au moins une pièce de raccordement (4) en matière plastique réalisée de manière différente par rapport au tronçon de tuyau flexible (2) est prévue pour relier le tuyau flexible (1) à une pièce de raccordement réalisée en complément d'un robinet sanitaire et/ou d'un lave-vaisselle et/ou d'un lave-linge ou d'un conduit d'alimentation en eau, et
dans lequel une extrémité (3) du tronçon de tuyau flexible (2) et la pièce de raccordement (4) sont reliés durablement par assemblage, de préférence par soudage par friction,
dans lequel
la résistance maximale à la pression du tronçon de tuyau flexible (2) et de la pièce de raccordement (4) est d'au moins 40 bar et le tronçon de tuyau flexible (2) est fabriqué dans un procédé d'extrusion et présente, sur l'extrémité (3), une zone d'assemblage (5) avec une géométrie intérieure et/ou extérieure différente du tronçon de tuyau flexible (2) restant, dans lequel la pièce de raccordement (4) est reliée durablement par assemblage dans la zone d'assemblage (5) au tronçon de tuyau flexible (2), et/ou
la résistance maximale à la pression du tronçon de tuyau flexible (2) et de la pièce de raccordement (4) est d'au moins 40 bar et une autre pièce de raccordement (22) est formée sur une autre extrémité (21) du tronçon de tuyau flexible (2), dans lequel le tronçon de tuyau flexible (2) et l'autre pièce de raccordement (22) sont fabriqués d'un seul tenant par extrusion dans un processus d'extrusion commun.

9. Tuyau flexible (1) selon la revendication 8, **caractérisé en ce que** le tronçon de tuyau flexible (2) et/ou la pièce de raccordement (4) sont fabriqués à partir d'une matière plastique, qui contient des structures aromatiques, et/ou d'un matériau issu de la famille des polysulfones, en particulier du polyphénylsulfone.

10. Tuyau flexible (1) selon la revendication 8 ou 9, **caractérisé en ce que** le tuyau flexible (1) présente une bague à chapeau (24) destinée à raccorder le tuyau flexible (1), en particulier un écrou de raccordement, qui est maintenue de manière imperdable sur le tronçon de tuyau flexible (2), dans lequel la pièce de raccordement (4) ou un épaulement (27) formé par celle-ci empêche un retrait de la bague à chapeau (24) du tronçon de tuyau flexible (2), de préférence dans lequel le tuyau flexible (1) présente deux bagues à chapeau (24).

11. Tuyau flexible (1) selon la revendication 10, **caractérisé en ce que** l'autre pièce de raccordement (22) présente un épaulement (23), qui forme une butée pour la ou une autre bague à chapeau (24) et empêche ce faisant un retrait de la bague à chapeau (24) ou des bagues à chapeau (24).

12. Tuyau flexible (1) selon la revendication 10 ou 11, **caractérisé en ce que** respectivement une pièce de raccordement (4, 22) est prévue sur des extrémités (3, 21) se faisant face du tuyau flexible (1), dans lequel les pièces de raccordement (4, 22) présentent respectivement un épaulement (23, 27), qui forment des butées pour la bague à chapeau (24) ou les bagues à chapeau (24) et empêchent ainsi un retrait de la bague à chapeau (24) ou des bagues à chapeau (24).

13. Tuyau flexible (1) selon l'une quelconque des revendications 8 à 12, **caractérisé en ce que** la pièce de raccordement (4) est fabriquée par un procédé de coulée par injection et/ou à partir du même matériau en matière plastique que le tronçon de tuyau flexible (2).

14. Tuyau flexible (1) selon l'une quelconque des revendications 8 à 13, **caractérisé en ce que** le tronçon de tuyau flexible (2) et la pièce de raccordement (4) sont réalisés pour l'installation d'eau potable.

15. Utilisation d'un tuyau flexible (1) selon l'une quelconque des revendications 8 à 14 dans un système de guidage d'eau menant au conduit d'eau, en particulier au conduit d'eau potable, et destiné à raccorder un robinet sanitaire, un lave-linge et/ou un lave-linge à un conduit d'alimentation en eau, en particulier à une vanne d'équerre, dans laquelle la pièce de raccordement (4) est reliée à une pièce de raccordement réalisée de manière complémentaire d'un robinet sanitaire ou d'un lave-vaisselle et/ou d'un lave-linge ou d'un conduit d'alimentation en eau, comme une vanne d'équerre.
